# EUROPÄISCHE PATENTSCHRIFT

(11) **EP 4 438 451 B1**
(45) Veröffentlichungstag und Bekanntmachung des Hinweises auf die Patenterteilung: **01.07.2026**
(21) Anmeldenummer: 24163847.7
(22) Anmeldetag: 15.03.2024
(51) Int. Cl.: B62J 43/23, H01M 50/264

(54) **VERBINDUNGSVORRICHTUNG ZUR VERBINDUNG EINES AKKUPACKS MIT EINEM ELEKTROFAHRRAD**
CONNECTION DEVICE FOR CONNECTING A BATTERY PACK TO AN ELECTRIC BICYCLE
DISPOSITIF DE CONNEXION POUR CONNECTER UN BLOC-BATTERIE À UN VÉLO ÉLECTRIQUE

(30) Priorität: 31.03.2023 DE 102023203034
(43) Veröffentlichungstag der Anmeldung: 02.10.2024
(60) Teilanmeldung: 26174991.5
(73) Patentinhaber: Robert Bosch GmbH, 70442 Stuttgart (DE)
(72) Erfinder: Schramm, Simone, 72070 Tuebingen (DE); Haid, Chris, 72805 Lichtenstein (DE); Wolff, Florian, 73614 Unterberken (DE); Philipzik, Fabian, 72076 Tuebingen (DE); Schwietert, Julian, 72760 Reutlingen (DE); Joerg, Julia, 70191 Stuttgart (DE); Gerold, Simon, 70565 Stuttgart (DE); Dietzen, Marc, 88085 Langenargen (DE); Stengele, Michael, 72477 Schwenningen (DE); Moritz, Jeffrey-Marco, 72636 Frickenhausen (DE); Sautter, Christoph, 72800 Eningen (DE); Buck, Simon, 72813 St. Johann (DE); Ruthardt, Aaron, 71157 Hildrizhausen (DE)

(56) Entgegenhaltungen:
- CN-U- 215 794 233
- DE-A1- 102021 207 891
- US-A1- 2022 315 158

## Beschreibung

### Stand der Technik

In der DE 20 2016 104 156 U1 ist eine Vorrichtung zur Sicherung der Entnahme eines Akkumulators beschrieben. In der DE 10 2021 104 606 A1 ist ein Akkupack für ein Fortbewegungsmittel mit einer Verbindungsvorrichtung beschrieben. Dokument US2022/315158A1 wird als der nächste Stand der Technik angesehen und zeigt die Präambel des Anspruchs 1.

### Offenbarung der Erfindung

Die Erfindung betrifft eine Verbindungsvorrichtung zur Verbindung eines Akkupacks mit einem Elektrofahrrad nach den Merkmalen von Anspruch 1. Es wird außerdem vorgeschlagen, dass die Sicherungseinheit an einem zweiten Abschnitt der Führungseinheit angeordnet ist, wobei die Sicherungseinheit ein bewegliches Sicherungselement aufweist. Vorteilhaft kann dadurch eine besonders sichere Entnahme des Akkupacks gewährleistet werden.

Die Verbindungsvorrichtung kann vollständig oder teilweise am Elektrofahrrad angeordnet sein. Alternativ oder zusätzlich ist denkbar, dass die Verbindungsvorrichtung vollständig oder teilweise am Akkupack angeordnet ist.

Der Akkupack ist insbesondere als ein Wechselakkupack ausgebildet, der bevorzugt werkzeuglos lösbar mit dem Verbraucher ausgebildet ist. Der Akkupack ist insbesondere verbindbar mit einer Ladevorrichtung zum Aufladen des Akkupacks ausgebildet. Alternativ oder zusätzlich kann der Akkupack auch derart ausgebildet sein, dass er im mit dem Verbraucher verbundenen Zustand aufladbar ist, beispielsweise über eine Ladebuchse am Akkupack oder am Rahmen des Elektrofahrrads. Der Akkupack umfasst dabei ein Gehäuse in welchem zumindest eine Akkuzelle angeordnet ist. Das Gehäuse des Akkupacks umfasst zumindest ein Gehäuseteil. Das Gehäuse ist vorzugsweise als ein Außengehäuse ausgebildet, wobei die einzelnen Gehäuseteile ebenfalls als Außengehäuseteile ausgebildet sind. Unter einem Außengehäuseteil soll im Zusammenhang dieser Anmeldung dabei insbesondere ein Gehäuseteil verstanden werden, welches im montierten Zustand den Akkupack nach außen abschließt. Das Gehäuse des Akkupacks kann metallisch und/oder aus einem Kunststoff ausgebildet sein. Die Akkuzelle kann beispielsweise als eine Li-Ion Akkuzelle ausgebildet sein. Insbesondere kann die Akkuzelle als eine zylindrische Rundzelle, eine prismatische Zelle oder als eine Pouch Zelle ausgebildet sein. Vorzugsweise ist im Gehäuse des Akkupacks ein Zellenhalter zur Aufnahme der Akkuzellen angeordnet. Der Zellenhalter ist teilweise oder vollständig innerhalb des Gehäuses des Akkupacks angeordnet. Das Gehäuse des Akkupacks kann einen oder mehrere Zellenhalter aufweisen. Der Zellenhalter kann Einzelzellenaufnahmen aufweisen, die zur Aufnahme einer einzelnen Akkuzelle ausgebildet sind. Der Zellenhalter ist bevorzugt einstückig und aus einem metallischen Material oder Kunststoff ausgebildet.

Unter einem Elektrofahrrad soll im Zusammenhang dieser Anmeldung insbesondere ein Fahrrad verstanden werden, das eine Antriebseinheit zur Unterstützung des Fahrers aufweist. Das Elektrofahrrad ist vorzugsweise als ein eBike, ein Pedelec, ein Lastenfahrrad, ein Klappfahrrad oder dergleichen ausgebildet. Die Antriebseinheit weist einen Motor auf, der beispielsweise als ein Mittelmotor oder als ein Nabenmotor ausgebildet sein kann. Der Motor ist vorzugsweise als ein Elektromotor ausgebildet. Die Antriebseinheit ist mit dem Akkupack zur Versorgung der Antriebseinheit mit Energie verbunden. Das Elektrofahrrad umfasst eine Elektronik mit einer Steuereinheit zur Steuerung oder Regelung des Elektrofahrrads. Die Elektronik umfasst vorzugsweise eine Sensoreinheit, wobei die Sensoreinheit beispielsweise Bewegungssensoren, Drehmomentsensoren, Geschwindigkeitssensoren, einen GNSS Empfänger, Magnetsensoren oder dergleichen aufweisen kann. Zudem umfasst die Elektronik eine Kommunikationsschnittstelle zur drahtlosen Verbindung des Elektrofahrrads mit einer externen Vorrichtung, wie beispielsweise einem Smartphone, und/oder einem Server. Zudem kann das Elektrofahrrad weitere Zusatzkomponenten oder Peripheriegeräte umfassen oder verbindbar mit diesen ausgebildet sein, wie beispielsweise einen Boardcomputer, eine insbesondere elektronische Gangschaltung, eine Lichteinheit zur Beleuchtung der Straße und/oder als Rückleuchte, ein Antiblockiersystem, ein Schloss und/oder eine weitere Komponente.

Die Führungseinheit umfasst zumindest ein Führungselement, das zur Führung des Akkupacks im oder am Elektrofahrrad während des Verbindungsprozesses ausgebildet ist. Die Führungseinheit weist insbesondere mehrere Führungselemente auf, wobei zumindest ein Führungselement am Akkupack und zumindest ein korrespondierendes Führungselement am Elektrofahrrad angeordnet ist. Das Führungselement kann beispielsweise als eine Führungsschiene oder als eine Führungsnut ausgebildet sein. Das Führungselement kann einstückig oder einteilig mit dem Elektrofahrrad, insbesondere mit einem Rahmen des Elektrofahrrads, ausgebildet sein. Unter "einstückig" soll im Zusammenhang dieser Anmeldung verstanden werden, dass mehrere Elemente aus einem Stück gefertigt, und damit nicht in irgendeiner Weise kraft-, form- oder stoffschlüssig miteinander verbunden sind. Unter "einteilig" soll im Zusammenhang dieser Anmeldung insbesondere zwei Elemente verstanden werden, die stoffschlüssig miteinander verbunden sind.

Unter einem Verbindungsprozess soll im Rahmen dieser Anmeldung der Prozess zwischen einem unverbundenen Zustand des Akkupacks mit dem Elektrofahrrad zu einem verbundenen Zustand des Akkupacks mit dem Elektrofahrrad sowie die umgekehrte Reihenfolge verstanden werden. Im verbundenen Zustand ist der Akkupack mechanisch und insbesondere auch elektrisch mit dem Elektrofahrrad verbunden, vorzugsweise verriegelt. Im verbundenen Zustand liegt zumindest ein gewisser mechanischer Kontakt zwischen dem Elektrofahrrad und dem Akkupack vor. Der Verbindungsprozess kann dabei lediglich durch eine Relativbewegung des Akkupacks zu dem Elektrofahrrad oder mittels einer zusätzlichen Betätigung durch den Benutzer erfolgen. Im verbundenen Zustand kann der Akkupack in einem verriegelten oder einem entriegelten Zustand vorliegen. Im entriegelten Zustand ist der Akkupack vorzugsweise elektrisch von dem Elektrofahrrad getrennt. Dies entspricht im Wesentlichen insbesondere einer Sekundärverriegelung.

Die Verriegelungseinheit ist derart ausgebildet, dass ein Lösen der Verriegelung nur über eine Betätigung der Verriegelungseinheit erfolgen kann.

Des Weiteren wird vorgeschlagen, dass die Verbindungsvorrichtung derart ausgebildet ist, dass der Akkupack über eine Schwenkbewegung und eine Linearbewegung mit dem Elektrofahrrad verbindbar und/oder lösbar ist. Vorteilhaft kann dadurch ein komfortabler Verbindungsprozess realisiert werden. Es erfolgt dabei insbesondere eine Schwenkbewegung beziehungsweise eine Linearbewegung des vollständigen Akkupacks und/oder zumindest eines Teils des Akkupacks relativ zu dem Elektrofahrrad.

Weiterhin wird vorgeschlagen, dass der erste Abschnitt und der zweite Abschnitt der Führungseinheit auf gegenüberliegenden Seiten der Führungseinheit angeordnet sind. Die Abschnitte können teilweise überlappen oder vollständig getrennt voneinander ausgebildet sein.

Zudem wird vorgeschlagen, dass die Verriegelungseinheit derart betätigbar ausgebildet ist, dass der Akkupack bei der Entriegelung teilweise linear entlang der Führungseinheit ausgeworfen wird. Vorteilhaft kann dadurch die eine besonders komfortable Entnahme des Akkupacks realisiert werden. Der Auswurf erfolgt dabei vorzugsweise nur teilweise entlang eines Bereichs von wenigen cm.

Des Weiteren wird vorgeschlagen, dass die Verriegelungseinheit zumindest ein bewegliches Verriegelungselement aufweist, wobei das Verriegelungselement im verriegelten Zustand insbesondere vorgespannt ausgebildet ist. Vorteilhaft kann durch die Vorspannung des Verriegelungselements ein Auswurfmechanismus für den Akkupack bereitgestellt werden. Das Verriegelungselement ist vorzugsweise relativ zu dem Elektrofahrrad und dem Akkupack beweglich ausgebildet. Das Verriegelungselement kann rotatorisch und/oder linear beweglich am Elektrofahrrad oder am Akkupack gelagert sein.

Weiterhin wird vorgeschlagen, dass die Verriegelungseinheit mit einer Betätigungseinheit gekoppelt ist, über die die Verriegelungseinheit vorzugsweise manuell betätigbar ausgebildet ist. Die Betätigungseinheit ist insbesondere als ein Schloss ausgebildet. Das Schloss ist vorzugsweise derart ausgebildet, dass es über einen Schlüssel betätigbar ist. Alternativ wäre ebenso denkbar, dass die Betätigungseinheit als ein Schalter, als ein Knopf, als eine Taste oder dergleichen ausgebildet und somit direkt über die Hand eines Benutzers betätigbar ist. Alternativ oder zusätzlich kann die Betätigungseinheit auch elektronisch ansteuerbar ausgebildet sein und einen Aktor umfassen. Die Ansteuerung kann dabei beispielsweise über eine Applikationssoftware auf einem mobilen Endgerät oder einen Fingerabdrucksensor erfolgen.

Zudem wird vorgeschlagen, dass die Verriegelungseinheit ein Linearlager zur Lagerung des Akkupacks im verriegelten Zustand aufweist. Vorteilhaft kann dadurch eine sichere Lagerung des Akkupacks im verriegelten Zustand gewährleistet werden.

Des Weiteren wird vorgeschlagen, dass die Sicherungseinheit ein Halteelement aufweist, dass nur im verriegelten Zustand den Akkupack am Elektrofahrrad hält. Das Halteelement kann dem Elektrofahrrad, insbesondere dem Rahmen des Elektrofahrrads, oder dem Akkupack angeordnet sein. Das Halteelement ist insbesondere starr ausgebildet. Vorzugsweise ist das Halteelement an der Führungseinheit angeordnet, wobei das Halteelement einstückig oder einteilig mit der Führungseinheit, insbesondere einem Führungselement der Führungseinheit, ausgebildet ist.

Weiterhin wird vorgeschlagen, dass das Sicherungselement als ein Anschlag ausgebildet ist, an welchem der Akkupack im entriegelten Zustand anliegt. Vorteilhaft kann dadurch der Akkupack im entriegelten Zustand sicher gehalten werden. Im verriegelten Zustand ist der Akkupack beabstandet zu dem Anschlag des Sicherungselements angeordnet.

Zudem wird vorgeschlagen, dass das Sicherungselement mit der Führungseinheit verbunden ist, wobei das Sicherungselement insbesondere als eine Metall-Blechfeder ausgebildet ist. Das Sicherungselement kann dabei einstückig oder einteilig mit der Führungseinheit ausgebildet sein oder kraft- und/oder formschlüssig mit der Führungseinheit, insbesondere einem Führungselement der Führungseinheit, ausgebildet sein. Das Sicherungselement ist insbesondere manuell betätigbar ausgebildet.

Des Weiteren betrifft die Erfindung insbesondere ein Elektrofahrrad mit einer Verbindungsvorrichtung wie zuvor beschrieben.

Weiterhin betrifft die Erfindung insbesondere einen Akkupack für das Elektrofahrrad.

Des Weiteren wird eine Verbindungsvorrichtung zur Verbindung eines Akkupacks mit einem Elektrofahrrad vorgeschlagen, welche eine Führungseinheit zur linearen Führung des Akkupacks im Verbindungsprozess, mit einer Verriegelungseinheit zur Verriegelung des Akkupacks am Elektrofahrrad aufweist, wobei die Verriegelungseinheit an einem ersten Abschnitt der Führungseinheit angeordnet ist, wobei die Verbindungsvorrichtung derart ausgebildet ist, dass der Akkupack ausschließlich über eine Linearbewegung mit dem Elektrofahrrad verbindbar ist. Es wird vorgeschlagen, dass die Verbindungsvorrichtung eine Sicherungseinheit zur Sicherung des Akkupacks im entriegelten Zustand aufweist, wobei die Sicherungseinheit ein bewegliches Sicherungselement aufweist. Vorteilhaft kann dadurch ein besonders sicherer Verbindungsvorgang realisiert werden.

Der Verbindungsprozess ist dabei vorzugsweise als ein Einschieben in einen Rahmen oder als ein Aufschieben des Akkupacks auf das Elektrofahrrad ausgebildet.

Des Weiteren wird vorgeschlagen, dass die Sicherungseinheit an dem ersten Abschnitt oder an dem zweiten Abschnitt der Führungseinheit angeordnet ist. Der erste Abschnitt und der zweite Abschnitt können teilweise überlappend oder vollständig getrennt voneinander ausgebildet sein.

Weiterhin wird vorgeschlagen, dass das Sicherungselement direkt betätigbar ausgebildet ist. Vorteilhaft kann dadurch die Entnahme des Akkupacks vereinfacht werden. Insbesondere ist dabei die Verriegelungseinheit derart betätigbar ausgebildet ist, dass der Akkupack bei der Entriegelung teilweise ausgeworfen wird, wodurch vorteilhaft der ausgeworfene Akkupack durch die Sicherungseinheit aufgefangen wird.

Zudem wird eine Verbindungsvorrichtung zur Verbindung eines Akkupacks mit einem Elektrofahrrad vorgeschlagen, welche eine Verriegelungseinheit zur Verriegelung des Akkupacks am Elektrofahrrad aufweist, wobei die Verriegelungseinheit mit einer Betätigungseinheit gekoppelt ist, über die die Verriegelungseinheit vorzugsweise manuell betätigbar ausgebildet ist, wobei die Betätigungseinheit in einem Aufnahmegehäuse der Verriegelungseinheit entlang einer Aufnahmerichtung aufgenommen ist. Es wird vorgeschlagen, dass die Verbindungsvorrichtung derart ausgebildet ist, dass die Betätigungseinheit zumindest an einer ersten Position und an einer zweiten Position innerhalb des Aufnahmegehäuses entlang der Aufnahmerichtung fixierbar ist. Vorteilhaft kann dadurch die Verbindungsvorrichtung optimal an das Elektrofahrrad angepasst werden.

Des Weiteren wird vorgeschlagen, dass die Betätigungseinheit ein erstes Verbindungselement und das Aufnahmegehäuse ein zweites Verbindungselement zur kraft-und/oder formschlüssigen Verbindung der Betätigungseinheit mit dem Aufnahmegehäuse aufweist. Vorteilhaft kann dadurch eine wirksame Verbindung gewährleistet werden.

Weiterhin wird vorgeschlagen, dass die Betätigungseinheit zumindest zwei erste Verbindungselemente und/oder das Aufnahmegehäuse zumindest zwei zweite Verbindungselemente aufweist, die zur Verbindung der Betätigungseinheit mit dem Aufnahmegehäuse über ein Positionierungselement ausgebildet sind. Vorteilhaft kann durch das Positionierungselement eine einfache Montage ermöglicht werden.

Zudem wird vorgeschlagen, dass das Positionierungselement einen Fixierabschnitt zur Fixierung des Positionierungselements in der Betätigungseinheit aufweist. Vorteilhaft kann dadurch eine wirksame Fixierung bereitgestellt werden. Der Fixierabschnitt ist vorzugsweise im Wesentlichen stiftförmig ausgebildet.

Des Weiteren wird vorgeschlagen, dass der Fixierabschnitt derart federnd ausgebildet ist, dass ein Kraftschluss zwischen dem Positionierungselement und dem ersten Verbindungselement und/oder dem zweiten Verbindungselement entsteht.

Weiterhin wird vorgeschlagen, dass das Positionierungselement einen Halteabschnitt zur Befestigung des Positionierungselements am Aufnahmegehäuse aufweist. Der Halteabschnitt ist vorzugsweise zur Festlegung des Positionierungselements am Aufnahmegehäuse ausgebildet. Bevorzugt ist der Halteabschnitt derart ausgebildet, dass dieser zum Lösen der Verbindung vom Benutzer gegriffen werden kann.

Zudem wird vorgeschlagen, dass das erste Verbindungselement und/oder das zweite Verbindungselement als eine Aussparung ausgebildet ist. Vorzugsweise ist das erste Verbindungselement und/oder das zweite Verbindungselement als ein Langloch ausgebildet ist.

Des Weiteren wird vorgeschlagen, dass das erste Verbindungselement und das zweite Verbindungselement direkt miteinander verbindbar ausgebildet sind. Vorteilhaft kann dadurch eine kompakte Bauweise realisiert werden.

Weiterhin wird vorgeschlagen, dass das erste Verbindungselement und/oder das zweite Verbindungselement als ein Gewinde ausgebildet ist. Vorteilhaft können die Verbindungselemente durch diese Maßnahme über eine Schraubverbindung miteinander verbunden werden.

Zudem wird vorgeschlagen, dass das erste Verbindungselement und/oder das zweite Verbindungselement ein Rastelement oder als eine Vielzahl von Rastelement ausgebildet ist. Vorteilhaft können die Verbindungselemente dadurch in einer Vielzahl von Positionen miteinander verbunden werden.

Weiterhin wird ein Akkupack, insbesondere einen Wechselakkupack vorgeschlagen, welcher ein Gehäuse aufweist, in welchem zumindest eine Akkuzelle angeordnet ist, wobei das Gehäuse als ein Außengehäuse ausgebildet ist und wobei das Gehäuse zumindest zwei Gehäuseteile aufweist, wobei das Gehäuse auf einer der zumindest einen Akkuzelle abgewandten Außenfläche eine Rippenstruktur mit einer Vielzahl an Rippen aufweist, wobei die Rippen einstückig mit dem Gehäuse ausgebildet sind. Es wird vorgeschlagen, dass die Rippenstruktur zumindest 40% der Außenfläche des Gehäuses einnimmt. Vorteilhaft können dadurch die thermischen und mechanischen Eigenschaften des Akkupacks optimiert und/oder Gewicht eingespart werden.

Des Weiteren wird vorgeschlagen, dass zumindest eines der Gehäuseteile aus einem Kunststoff ausgebildet ist und die Rippenstruktur aufweist. Alternativ oder zusätzlich ist ebenso denkbar, dass der Akkupack ein metallisches Gehäuseteil aufweist, an welchem die Rippenstruktur ausgebildet ist. Insbesondere besteht die Rippenstruktur aus einem Kunststoff.

Weiterhin wird vorgeschlagen, dass die Rippen eine insbesondere gleichmäßige Höhe aufweisen, wobei die Höhe vorzugsweise in einem Bereich zwischen 0,05 mm bis 1 mm liegt. Vorteilhaft werden dadurch die thermischen und mechanischen Eigenschaften weiter optimiert.

Zudem wird vorgeschlagen, dass das die Rippenstruktur umfassende Gehäuseteil eine Dicke aufweist, wobei die Dicke in einem Bereich zwischen 0,7 mm bis 2,5 mm liegt. Vorteilhaft werden dadurch die thermischen und mechanischen Eigenschaften weiter optimiert.

Des Weiteren wird vorgeschlagen, dass ein Verhältnis zwischen der Höhe der Rippen und der Dicke des Gehäuseteils in einem Bereich zwischen 0,07 und 0,4 liegt. Vorteilhaft werden dadurch die thermischen und mechanischen Eigenschaften weiter optimiert.

Weiterhin wird vorgeschlagen, dass die Rippen zumindest bereichsweise, vorzugsweise im Wesentlichen stets, einen insbesondere gleichmäßigen Abstand voneinander aufweisen, wobei der Abstand in einem Bereich zwischen 0,5 mm bis 2 mm liegt. Vorteilhaft werden dadurch die thermischen und mechanischen Eigenschaften weiter optimiert.

Zudem wird vorgeschlagen, dass der Abstand benachbarter Rippen kleiner als 20% eines Durchmessers der zumindest einen Akkuzellen ausgebildet ist. Vorteilhaft werden dadurch die thermischen und mechanischen Eigenschaften weiter optimiert.

Des Weiteren wird vorgeschlagen, dass sich die Rippen vorzugswese unterbrechungslos entlang des gesamten Gehäuseteils erstrecken. Vorteilhaft werden dadurch die thermischen und mechanischen Eigenschaften weiter optimiert.

Weiterhin wird vorgeschlagen, dass die Rippen zumindest abschnittsweise derart auf einer gekrümmten Außenfläche angeordnet sind, dass sich benachbarte Rippen voneinander weg erstrecken. Vorteilhaft werden dadurch die thermischen und mechanischen Eigenschaften weiter optimiert.

Zudem wird vorgeschlagen, dass die Rippen eckige Kanten oder abgerundete Kanten aufweisen. Vorteilhaft werden dadurch die thermischen und mechanischen Eigenschaften weiter optimiert.

Weiterhin wird ein Verbindungsmittel, insbesondere Verbindungsplatte, für einen Akkupack vorgeschlagen, wobei das Verbindungsmittel zumindest ein Befestigungselement zur Befestigung des Verbindungsmittels an einem Gehäuseteil des Akkupacks aufweist, wobei das Verbindungsmittel zur lösbaren Verbindung des Akkupacks mit einem Verbraucher ausgebildet ist, mit zumindest einem Funktionsabschnitt, der im mit dem Akkupack verbundenen Zustand über das Gehäuseteil des Akkupacks hinausragt. Es wird vorgeschlagen, dass der Funktionsabschnitt zumindest zwei Funktionen aufweist. Voreilhaft können durch diese Maßnahmen zusätzliche Funktionen in das Verbindungsmittel integriert werden.

Die Funktionen werden vorzugsweise durch Funktionselemente, wie beispielsweise einem Führungselement, einem Sicherungselement, einer Verriegelungselement, einem Halteelement, einem Zentrierelement, einem Lagerelement oder dergleichen bereitgestellt. Der zumindest eine Funktionsabschnitt umfasst zumindest zwei Funktionselemente.

Das Verbindungsmittel ist im am Akkupack befestigten Zustand Teil des Akkupacks und wird in unterschiedlichen Konfigurationen bereitgestellt, um den Akkupack an unterschiedliche Verbindungsvorrichtung und/oder an unterschiedliche Verbauarten des Akkupacks im Elektrofahrrad anzupassen. Vorzugsweise ist der Akkupack mit zumindest zwei Verbindungsmitteln verbindbar ausgebildet, wobei durch die Wahl des Verbindungsmittel der Akkupack optimal an das Elektrofahrrad anpassbar ist.

Unter "über das Gehäuseteil des Akkupacks hinausragen" soll im Zusammenhang dieser Anmeldung insbesondere verstand werden, dass das Verbindungsmittel mit Blick entlang der Längserstreckung des Akkupacks gegenüber dem Gehäuseteil des Akkupacks seitlich hinausragt und somit die Außenkontur des Akkupacks in zumindest zwei Dimensionen, bevorzugt in drei Dimensionen, vergrößert.

Des Weiteren wird vorgeschlagen, dass das Verbindungsmittel zumindest zwei Funktionsabschnitte auf benachbarten und/oder gegenüberliegenden Seiten aufweist. Vorteilhaft können dadurch weitere Funktionen realisiert werden.

Weiterhin wird vorgeschlagen, dass das Verbindungsmittel zumindest drei Funktionsabschnitte aufweist, die im Querschnitt betrachtet jeweils in unterschiedlichen Quadranten angeordnet sind. Vorteilhaft können dadurch weitere Funktionen realisiert werden.

Zudem wird vorgeschlagen, dass der Funktionsabschnitt zumindest ein Führungselement zur Führung des Akkupacks während eines Verbindungsvorgangs aufweist. Vorteilhaft kann dadurch eine optimale Führung des Akkupacks während des Verbindungsprozesses gewährleistet werden. Das Führungselement des Funktionsabschnitts ist vorzugsweise korrespondierend zu einem Führungselement der Führungseinheit am Elektrofahrrad ausgebildet. Das Führungselement des Funktionsabschnitt kann beispielsweise als eine Gleitfläche aufweisen.

Des Weiteren wird vorgeschlagen, dass das Führungselement zumindest eine Einführschräge aufweist. Vorteilhaft kann dadurch die Führung weiter verbessert werden.

Weiterhin wird vorgeschlagen, dass das Führungselement ein vorzugsweise elastisches Dämpfungselement und/oder ein Verstärkungselement aufweist. Vorteilhaft kann dadurch ein robustes Verbindungsmittel bereitgestellt werden. Das Dämpfungselement und das Führungselement können einstückig, einteilig oder mehrteilig miteinander ausgebildet sein. Das Dämpfungselement kann aus einem elastischen Kunststoff, insbesondere einem Gummi, oder aus einem Federelement ausgebildet sein. Das Verstärkungselement und das Führungselement können einstückig, einteilig oder mehrteilig miteinander ausgebildet sein. Das Verstärkungselement kann aus einem metallischen Werkstoff und/oder aus einer Materialverdickung ausgebildet sein.

Zudem wird vorgeschlagen, dass der Funktionsabschnitt ein Verbindungselement zur Verbindung des Verbindungsmittels mit einem korrespondierenden Linearlagerelement des Verbrauchers aufweist. Vorteilhaft kann dadurch eine robuste Verbindung zwischen dem Akkupack und einem Verbraucher, insbesondere einem Elektrofahrrad, realisiert werden. Des Weiteren wird vorgeschlagen, dass das Verbindungselement als eine Öffnung, insbesondere als eine rechteckige Öffnung, vorzugsweise als eine L-förmige Öffnung, ausgebildet ist. Der Akkupack kann auch für andere Verbraucher ausgebildet sein, beispielsweise für ein Gartengerät, für ein Haushaltsgerät oder für eine Werkzeugmaschine.

Weiterhin wird vorgeschlagen, dass der Funktionsabschnitt zumindest ein in Richtung des Gehäuseteils des Akkupacks, insbesondere in Richtung des längeren Gehäuseteils, gerichtetes Verbindungselement aufweist. Vorteilhaft kann dadurch die Verbindung weiter verbessert werden. Insbesondere ist das in Richtung des Gehäuseteils des Akkupacks gerichtete Verbindungselement zur Verbindung des Akkupacks mit einer Führungseinheit des Verbrauchers ausgebildet.

Des Weiteren wird vorgeschlagen, dass das Verbindungsmittel ein Verriegelungselement zur Verriegelung des Akkupacks aufweist. Vorteilhaft kann dadurch die Verriegelung optimal auf den Akkupack angepasst werden.

Weiterhin wird vorgeschlagen, dass das Verbindungsmittel ein Sicherungselement zur Sicherung des Akkupacks in einem entriegelten Zustand aufweist. Vorteilhaft kann dadurch der Lösevorgang verbessert werden.

Zudem wird ein Akkupack mit einem Verbindungsmittel wie zuvor beschrieben oder einem ersten Verbindungsmittel mit einem in Richtung des Gehäuseteils des Akkupacks gerichteten Verbindungselement und einem zweiten Verbindungsmittel mit einem Verriegelungselement vorgeschlagen.

Weiterhin wird ein Elektrofahrrad mit einem Rahmen vorgeschlagen, wobei der Rahmen zumindest ein rohrförmiges Rahmenteil aufweist, das zur Aufnahme eines Akkupacks mit einem Verbindungsmittel ausgebildet ist, wobei das Rahmenteil zumindest ein Führungselement und/oder zumindest ein Verbindungselement für das Verbindungsmittel aufweist. Das Rahmenteil kann dabei beispielhaft als ein Oberrohr, als ein Sattelrohr, als ein Unterrohr oder dergleichen ausgebildet sein.

Alternativ wird ein Akkupack für ein Elektrofahrrad vorgeschlagen, wobei der Akkupack zur teilweisen oder vollständigen Aufnahme innerhalb eines Rahmenteils des Elektrofahrrads ausgebildet ist. Es wird vorgeschlagen, dass der Akkupack eine Entnahmehilfe aufweist, die zur Unterstützung der Entnahme des Akkupacks aus dem Rahmenteil des Elektrofahrrads ausgebildet ist. Vorteilhaft kann dadurch die Entnahme des Akkupacks aus dem Elektrofahrrad erleichtert werden.

Die Entnahmehilfe ist vorzugsweise speziell zur Entnahme des Akkupacks vorgesehen und weist vorzugsweise keine weitere Funktion, beispielsweise kein im Zusammenhang mit der Verbindung des Akkupacks stehendes Mittel, auf. Der Akkupack kann ein oder mehrere Entnahmehilfe aufweisen, die benachbart zueinander und/oder beabstandet zueinander angeordnet sind. Die Entnahmehilfen können dabei gleich oder unterschiedliche ausgebildet sein.

Des Weiteren wird vorgeschlagen, dass die Entnahmehilfe als eine Eingriffsmulde ausgebildet ist. Vorteilhaft kann dadurch ein kompakter Aufbau des Akkupacks realisiert werden. Die Eingriffsmulde kann beispielsweise als Vertiefung in einer Oberfläche des Akkupacks, insbesondere eines Gehäuseteils des Akkupacks, angeordnet sein. Alternativ ist auch denkbar, dass die Entnahmehilfe im Wesentlichen eben auf einer Oberfläche angeordnet oder als Erhebung auf der Oberfläche ausgebildet ist.

Weiterhin wird vorgeschlagen, dass die Entnahmehilfe eine Oberflächenstruktur zur Erhöhung der Rauigkeit aufweist. Vorteilhaft kann dadurch die Entnahme weiter vereinfacht werden. Die Oberflächenstruktur kann beispielsweise als eine Mehrzahl an insbesondere rippenförmigen Erhebungen ausgebildet sein. Alternativ oder zusätzlich ist denkbar, dass die Oberflächenstruktur eine Mehrzahl an insbesondere nutenförmigen Vertiefungen aufweist. Die Strukturen können allerdings auch eine andere Form, beispielsweise kreisförmig, oval oder rechteckig aufweisen. Es ist ebenso denkbar, dass die Oberflächenstruktur unregelmäßig ausgebildet ist. Die Oberflächenstruktur kann auch durch ein sich von dem Gehäuse unterscheidendes Material ausgebildet sein, welches eine höhere Griffigkeit und/oder Reibkraft aufweist und somit eine höhere Haftung für die Finger eines Benutzers aufweist. Die Entnahmehilfe ist vorzugsweise ergonomisch geformt, beispielsweise in Form einer fingerförmigen Eingriffsmulde.

Zudem wird vorgeschlagen, dass der Akkupack ein Gehäuse aufweist, an welchem zumindest ein Verbindungsmittel zur Verbindung mit dem Rahmenteil des Elektrofahrrads befestigt ist, wobei das Verbindungsmittel die Entnahmehilfe aufweist. Vorteilhaft kann dadurch die Entnahmehilfe bei Bedarf und speziell für das Elektrofahrrad angeordnet und ausgebildet sein.

Des Weiteren wird vorgeschlagen, dass die Entnahmehilfe einstückig mit dem Verbindungsmittel ausgebildet ist. Alternativ ist auch denkbar, dass die Entnahmehilfe einteilig oder mehrteilig mit Verbindungsmittel und damit aus einem anderen Werkstoff ausgebildet ist.

Weiterhin wird vorgeschlagen, dass die Entnahmehilfe mittig im Verbindungsmittel angeordnet ist. Alternativ oder zusätzlich ist denkbar, dass die Entnahmehilfe im Bereich einer Befestigungselementaufnahme angeordnet ist.

### Zeichnungen

Weitere Vorteile ergeben sich aus der folgenden Zeichnungsbeschreibung. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Merkmale unterschiedlicher Ausführungsformen werden mit dem gleichen Bezugszeichen und einem zusätzlichen, die Ausführungsform kennzeichnenden, Buchstaben gekennzeichnet. Die Zeichnungen sind dabei wenn nicht anders beschrieben maßstabsgetreu dargestellt.

Es zeigen:
Fig. 1 eine perspektivische Ansicht eines Elektrofahrrads mit einem Akkupack;
Fig. 2 eine perspektivische Ansicht eines Akkupacks;
Fig. 3 eine Seitenansicht einer Verbindungsvorrichtung für das Elektrofahrrad;
Fig. 4 eine perspektivische Rückansicht eines Verbindungsmittels für den Akkupack gemäß Fig. 2;
Fig. 5 eine perspektivische Rückansicht einer Führungseinheit der Verbindungsvorrichtung nach Fig. 3 im zweiten Abschnitt;
Fig. 6 eine perspektivische Ansicht der Verbindungsvorrichtung im ersten Abschnitt;
Fig. 7 eine Seitenansicht der Verbindungsvorrichtung nach Fig. 3 im mit dem Akkupack nach Fig. 2 verbundenen und verriegelten Zustand;
Fig. 8 eine schematische Ansicht der Verbindungsvorrichtung und des Akkupacks in einem entriegelten und gesicherten Zustand;
Fig. 9 eine erste Entnahmemöglichkeit für den Akkupack nach Fig. 7;
Fig. 10 eine zweite Entnahmemöglichkeit für den Akkupack nach Fig. 7;
Fig. 11 eine alternative Ausführungsform einer Sicherungseinheit für die Verbindungsvorrichtung nach Fig. 3;
Fig. 12 eine perspektivische Vorderansicht des Verbindungsmittels gemäß Fig. 4;
Fig. 13 eine perspektivische Ansicht eines Akkupacks zu Beginn eines Verbindungsprozesses;
Fig. 14 ein Längsschnitt durch den Akkupack und die Verbindungsvorrichtung im entriegelten und gesicherten Zustand;
Fig. 15 ein Längsschnitt durch den Akkupack und die Verbindungsvorrichtung im entriegelten Zustand nach einem Lösen der Sicherung;
Fig. 16 eine Draufsicht auf eine Verbindungsvorrichtung mit einer weiteren alternativen Ausführungsform einer Sicherungseinheit;
Fig. 17 eine Seitenansicht eines Akkupacks nach Fig. 2 im durch die Sicherungseinheit gemäß Fig. 16 gesicherten Zustand;
Fig. 18 eine Draufsicht auf eine Verbindungsvorrichtung mit einer weiteren alternativen Ausführungsform einer Sicherungseinheit;
Fig. 19 eine perspektivische Ansicht eines Akkupacks nach Fig. 2 im mit der Verbindungsvorrichtung nach Fig. 6 verbundenen Zustand mit einem Aufnahmegehäuse einer Betätigungseinheit in einer Explosionsdarstellung;
Fig. 20 ein Querschnitt durch das Aufnahmegehäuse gemäß Fig. 19;
Fig. 21 eine alternative Ausführungsform einer Betätigungseinheit für ein Aufnahmegehäuse in einer schematischen Ansicht;
Fig. 22 eine alternative Ausführungsform eines Aufnahmegehäuses für eine Betätigungseinheit im mit der Betätigungseinheit nach Fig. 21 verbundenen Zustand;
Fig. 23 eine perspektivische Ansicht einer weitere Ausführungsform eines Aufnahmegehäuses mit einer Betätigungseinheit in einer ersten Position;
Fig. 24 eine weitere Ausführungsform eines Aufnahmegehäuses mit einer Betätigungseinheit in einer zweiten Position;
Fig. 25 ein Querschnitt durch ein Gehäuse des Akkupacks gemäß Fig. 2;
Fig. 26 eine vergrößerte Darstellung eines Ausschnitts des Gehäuses nach Fig. 25;
Fig. 27 ein Querschnitt durch eine alternative Rippenstruktur für ein Gehäuse eines Akkupacks;
Fig. 28 ein Querschnitt durch eine weitere alternative Rippenstruktur für ein Gehäuse eines Akkupacks;
Fig. 29 ein Querschnitt durch eine weitere alternative Rippenstruktur für ein Gehäuse eines Akkupacks;
Fig. 30 ein Querschnitt durch eine weitere alternative Ausführungsform eines Gehäuses für einen Akkupack;
Fig. 31 eine Vorderansicht des Akkupacks nach Fig. 2;
Fig. 32 eine Rückansicht des Akkupacks nach Fig. 2;
Fig. 33 eine schematische Abbildung einer alternativen Ausführungsform eines Rahmens eines Elektrofahrrads für ein Verbindungsmittel nach Fig. 31;
Fig. 34 perspektivische Ansichten einer alternativen Ausführungsform der Verbindungsmittel für den Akkupack nach Fig. 2;
Fig. 35 eine schematische Ansicht einer weiteren alternativen Ausführungsform eines Verbindungsmittels für einen Akkupack;
Fig. 36 eine schematische Ansicht einer weiteren alternativen Ausführungsform eines Verbindungsmittels für einen Akkupack;
Fig. 37 eine Vorderansicht einer weiteren Ausführungsform eines Verbindungsmittels für einen Akkupack mit einer Entnahmehilfe;
Fig. 38 eine perspektivische Ansicht des Verbindungsmittels nach Fig. 37;
Fig. 39 eine alternative Ausführungsform einer Oberflächenstruktur einer Entnahmehilfe;
Fig. 40 eine weitere alternative Ausführungsform einer Oberflächenstruktur einer Entnahmehilfe;
Fig. 41 eine weitere alternative Ausführungsform einer Oberflächenstruktur einer Entnahmehilfe.

### Beschreibung der Ausführungsbeispiele

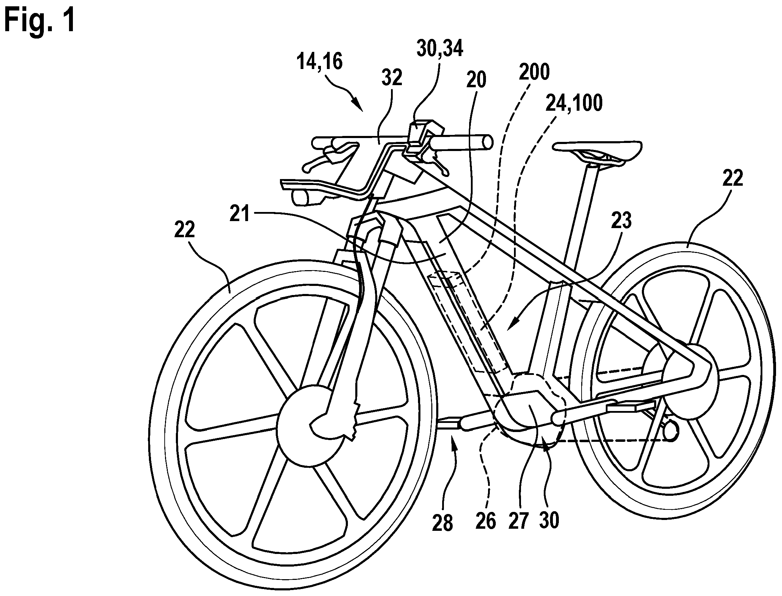

In Fig. 1 ist eine perspektivische Ansicht eines Verbrauchers 14 in Form eines Elektrofahrrads 16 gezeigt. Das Elektrofahrrad 16 kann beispielsweise als ein Pedelec oder als ein E-Bike ausgebildet sein.

Das Elektrofahrrad 16 weist ein Gehäuse in Form eines Rahmens 20 bzw. eines Fahrradrahmens auf. Mit dem Rahmen 20 sind zwei Räder 22 verbunden. Der Rahmen 20 umfasst mehrere Rahmenteile, insbesondere ein Unterrohr 21, ein Oberrohr und ein Sattelrohr. Zudem weist das Elektrofahrrad 16 einen Energiespeicher 24 in Form eines Akkupacks 100 auf. Zudem weist das Elektrofahrrad 16 eine Antriebseinheit 26 auf, die einen Elektromotor beziehungsweise einen Hilfsmotor umfasst. Der Elektromotor ist vorzugsweise als ein Permanentmagneterregter, bürstenloser Gleichstrommotor ausgebildet. Der Elektromotor ist beispielhaft als ein Mittelmotor ausgebildet, wobei auch ein Nabenmotor oder dergleichen denkbar ist. Das Elektrofahrrad 16, insbesondere die Antriebseinheit 26 des Elektrofahrrads 16, wird über den Energiespeicher 24 mit Energie versorgt. Der Akkupack 100 ist beispielhaft im Rahmen 20 integriert ausgebildet sein. Der Akkupack 100 ist dabei als Wechselakkupack ausgebildet, der über eine Verbindungsvorrichtung 200 lösbar mit dem Elektrofahrrad 16 verbindbar ausgebildet ist.

Die Antriebseinheit 26 umfasst eine Steuereinheit (nicht dargestellt), die zur Steuerung oder Regelung des Elektrofahrrads 16, insbesondere des Elektromotors, ausgebildet ist. Das Elektrofahrrad 16 weist eine Tretkurbel 28 auf. Die Tretkurbel 28 weist eine Tretkurbelwelle (nicht dargestellt) auf. Die Steuereinheit des Elektrofahrrads 16 ist mit einer Sensoreinheit (nicht dargestellt) verbunden. Die Sensoreinheit des Elektrofahrrads 16 umfasst beispielhaft mehrere Sensorelemente, wie einen Drehmomentsensor, einen Bewegungssensor, beispielsweise in Form eines Beschleunigungssensors, und einen Magnetsensor.

Die Steuereinheit und die Antriebseinheit 26 mit dem Elektromotor und der Tretkurbelwelle sind in einem mit dem Rahmen 20 verbundenen Antriebsgehäuse 27 angeordnet. Die Antriebsbewegung des Elektromotors wird vorzugsweise über ein Getriebe (nicht dargestellt) auf die Tretkurbelwelle übertragen, wobei die Größe der Unterstützung durch die Antriebseinheit 26 mittels der Steuereinheit gesteuert oder geregelt wird. Die Steuereinheit ist dazu ausgebildet, die Antriebseinheit 26 derart anzusteuern, dass der Fahrer des Elektrofahrrads 16 beim Pedalieren unterstützt wird. Vorzugsweise ist die Steuereinheit durch den Fahrer bedienbar ausgebildet, sodass der Fahrer den Unterstützungsgrad einstellen kann.

Die Steuereinheit und die Sensoreinheit sind einer Elektronik (nicht dargestellt) des Elektrofahrrads 16 zugeordnet. Die Elektronik umfasst beispielhaft eine Leiterplatte, auf der eine Recheneinheit in Form einer CPU, eine Speichereinheit und die Sensoreinheit angeordnet ist. Die Elektronik ist beispielhaft vollständig in dem Antriebsgehäuse 27 der Antriebseinheit 26 angeordnet. Es ist allerdings auch denkbar, dass die Elektronik nur teilweise im Antriebsgehäuse 27 angeordnet ist und Komponente der Elektronik an anderen Bereichen des Elektrofahrrads 16 angeordnet sind. Zudem ist auch eine Anordnung der Elektronik außerhalb des Antriebsgehäuses 27 denkbar.

Das Elektrofahrrad 16 umfasst zudem beispielhaft einen Boardcomputer 30, der an einem Lenker 32 des Elektrofahrrads 16 angeordnet ist. Der Boardcomputer 30 ist teilweise lösbar mit dem Elektrofahrrad 16 ausgebildet. Der Boardcomputer 30 umfasst eine Anzeigeeinheit 34, die zur Anzeige von Informationen ausgebildet ist. Der Boardcomputer 30 umfasst zudem ein Bedienelement (nicht dargestellt), über das der Benutzer beziehungsweise der Fahrer den Boardcomputer 30 und/oder das Elektrofahrrad 16 steuern kann. Das Bedienelement ist beispielhaft als ein berührungsempfindlicher Bildschirm ausgebildet. Es ist aber ebenso denkbar, dass das Bedienelement des Bordcomputers 30 aus Knöpfen oder Tasten ausgebildet ist. Der Boardcomputer 30 ist mit der Steuereinheit des Elektrofahrrads 16 derart verbunden, dass Informationen ausgetauscht werden können. Beispielsweise ist über die Anzeigeeinheit 34 eine von der Steuereinheit ermittelte Geschwindigkeit, ein eingestellter Unterstützungsgrad des Elektromotors, eine Routeninformation einer Navigationseinheit und ein Ladezustand des Energiespeichers 24 anzeigbar.

Beispielhaft ist der Akkupack 100 in dem Unterrohr 21 des Rahmens 20 angeordnet. Das Unterrohr 21 umfasst dabei einen Aufnahmeschacht 23, in welchem der Akkupack 100 im Wesentlichen vollständig im verbundenen Zustand angeordnet ist. Zur Verbindung wird der Akkupack 100 dabei in das Unterrohr 21 eingeschwenkt. Die Verbindung erfolgt über die Verbindungsvorrichtung 200, die beispielhaft vollständig im Rahmen 20 verbaut ist. Es ist ebenso denkbar, dass die Verbindungsvorrichtung 200 nur teilweise im Rahmen 20 des Elektrofahrrads 16 verbaut ist.

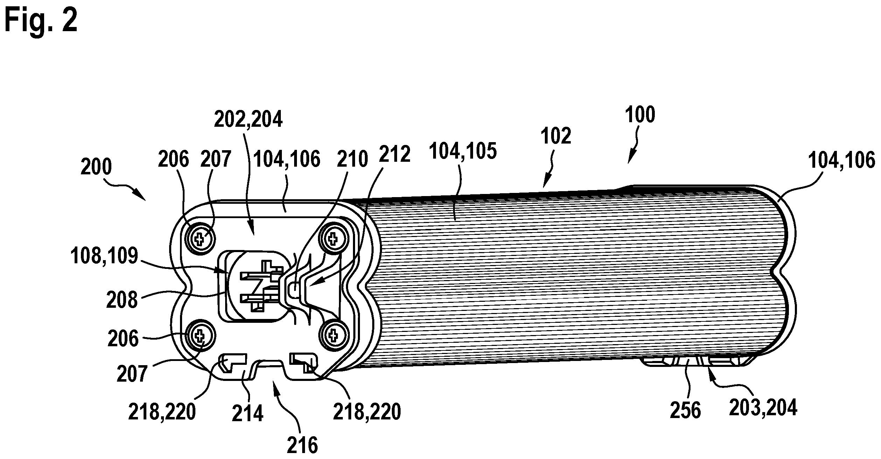

In Fig. 2 ist der im Rahmen 20 des Elektrofahrrads 16 aufgenommene Akkupack 100 in einer perspektivischen Ansicht gezeigt. Der Akkupack 100 umfasst ein Gehäuse 102, das beispielhaft drei Gehäuseteile 104 aufweist. Im Gehäuse 102 des Akkupacks 100 sind beispielhaft 20 Akkuzellen (nicht dargestellt) angeordnet, die über eine Serien- und Parallelschaltung elektrisch miteinander zu einem 36V Akkupack verbunden sind. Zudem weist der Akkupack 100 ein Batteriemanagementsystem (nicht dargestellt) auf, das zur Steuerung und Überwachung des Akkupacks 100 ausgebildet ist, wobei das Batteriemanagementsystem innerhalb des Gehäuses 102 des Akkupacks 100 angeordnet ist. Das Gehäuse 102 weist ein mittleres Gehäuseteil 105 auf, das beispielhaft rohrförmig mit einem an die aufgenommenen Akkuzellen angepassten Querschnitt ausgebildet ist. Das mittlere Gehäuseteil 105 ist einstückig ausgebildet und erstreckt sich im Wesentlichen entlang der gesamten Längserstreckung des Akkupacks 100. Stirnseitig weist das Gehäuse 102 zwei als Endplatten 106 ausgebildete Gehäuseteile 104 auf. Die Endplatten 106 sind beispielhaft mittels eines Laserdurchstrahlschweißprozesses mit dem mittleren Gehäuseteil 105 verbunden. Es wären alternativ aber auch andere Verbindungsarten, beispielsweise eine Verschraubung, denkbar.

Die Verbindungsvorrichtung 200 zur Verbindung des Akkupacks 100 mit dem Elektrofahrrad 16 weist akkupackseitige Komponenten, die dem Akkupack 100 zugeordnet sind, und fahrradseitige Komponenten, die dem Elektrofahrrad 16 zugeordnet sind, auf. In diesem Zusammenhang soll unter zugeordnet verstanden werden, dass die Komponente im normalen Gebrauch an dem Akkupack 100 beziehungsweise an dem Elektrofahrrad 16 befestigt ist.

Die Verbindungsvorrichtung 200 weist beispielhaft zwei akkupackseitige Komponenten auf. Alternativ wäre auch nur eine akkupackseitige Komponente oder mehrere akkupackseitige Komponenten denkbar. Die akkupackseitigen Komponenten sind beispielhaft als Verbindungsmittel 202, 203 ausgebildet. Die Verbindungsmittel 202, 203 sind beispielhaft in Form von Verbindungsplatten 204 ausgebildet, die an den Endplatten 106 des Akkupacks 100 befestigt sind. Die Befestigung erfolgt dabei über eine Schraubverbindung, wobei auch eine andere kraft- und/oder formschlüssige Verbindung oder ein Stoffschluss denkbar ist. Es ist ebenfalls denkbar, dass das Verbindungsmittel 202, 203 einstückig oder einteilig mit dem Gehäuse 102 des Akkupacks 100 ausgebildet ist. Beispielhaft ist denkbar, dass die Endplatten 106 als Verbindungsmittel 202, 203 ausgebildet sind und deren Funktion übernehmen.

Die Verbindungsmittel 202, 203 sind dabei unterschiedlich ausgebildet und unterscheiden sich dabei insbesondere in ihren Funktionen. Das erste oder vordere Verbindungsmittel 202 ist an der Endplatte 106 des Akkupacks 100 angeordnet, die die elektrische Schnittstelle 108 des Akkupacks 100 umfasst. Die elektrische Schnittstelle 108 des Akkupacks 100 ist zur elektrischen Verbindung des Akkupacks 100 mit dem Elektrofahrrad 16, insbesondere zur Leistungsversorgung und/oder zum Informationsaustausch, ausgebildet. Die elektrische Schnittstelle 108 des Akkupacks 100 umfasst beispielhaft eine Buchse 109.

Die Verbindungsmittel 202, 203 sind beispielhaft einstückig ausgebildet. Die Verbindungsmittel 202, 203 sind zudem beispielhaft aus einem Kunststoff ausgebildet, insbesondere aus einer Hartplastik.

Das Verbindungsmittel 202 weist beispielhaft vier Befestigungselementaufnahmen 206 auf, die zur Befestigung des Verbindungsmittels 202 an dem Gehäuse 102 des Akkupacks 100, insbesondere an der Endplatte 106, ausgebildet ist. Die Befestigungselementaufnahmen 206 sind beispielhaft als kreisförmige Aussparungen für Schrauben 207 ausgebildet.

Zudem weist das Verbindungsmittel 202 eine Durchgangsöffnung 208 im Bereich der elektrischen Schnittstelle 108 des Akkupacks 100 auf, um eine elektrische Verbindung mit einer korrespondierenden elektrischen Schnittstelle des Elektrofahrrads 16 zu ermöglichen.

Weiterhin umfasst das Verbindungsmittel 202 ein Verriegelungselement 210 einer Verriegelungseinheit 212 zur lösbaren Verriegelung des Akkupacks 100 an dem Elektrofahrrad 16, ein Führungselement 214 einer Führungseinheit 216 zur Führung des Akkupacks 100 während des Verbindungsvorgangs mit dem Elektrofahrrad 16 und zwei beispielhaft L-förmige Aussparungen 218 zur Zentrierung des Akkupacks 100. Die L-förmige Aussparungen 218 sind zudem als Linearlagerelemente 220 ausgebildet, die im verbundenen Zustand den Akkupack 100 lagern und im Fall von Vibrationen die auftretenden Kräfte aufnehmen.

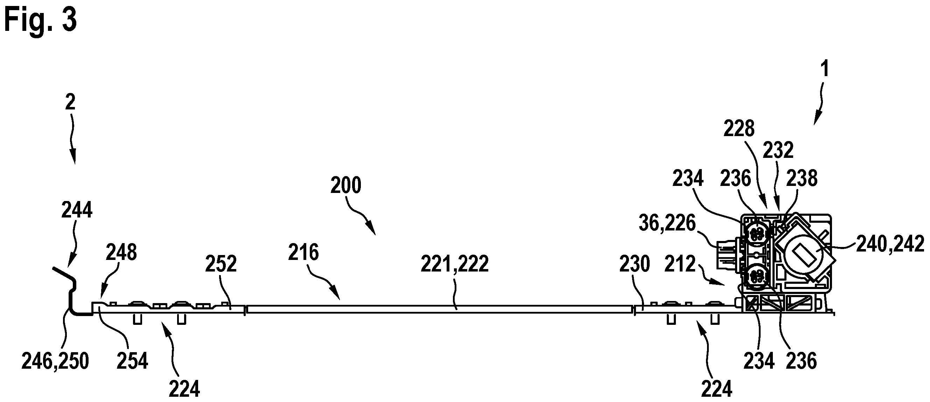

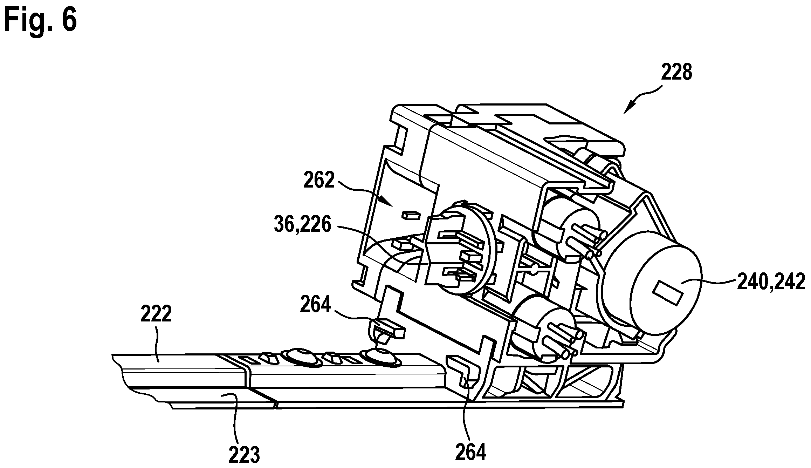

In Fig. 3 sind die fahrradseitigen Komponenten der Verbindungsvorrichtung 200 in einer Seitenansicht gezeigt. Die fahrradseitigen Komponenten der Verbindungsvorrichtung 200 umfassen beispielhaft ein Führungselement 221 in Form einer Führungsschiene 222 mit benachbarten Führungsnuten 223 (siehe beispielsweise Fig. 6), die der Führungseinheit 216 der Verbindungsvorrichtung 200 zugeordnet ist. Die Befestigung des Führungsschiene 222 im Rahmen des Elektrofahrrads 16 erfolgt beispielhaft über eine Schraubverbindung 224.

Zudem umfasst die Verbindungsvorrichtung 200 einen Stecker 226, der einer elektrischen Schnittstelle 36 des Elektrofahrrads 16 zugeordnet ist und zu der elektrischen Schnittstelle 108 des Akkupacks 100 korrespondiert. Der Stecker 226 ist dabei lösbar mit der Führungseinheit 216 verbunden. Die elektrische Schnittstelle 36 des Elektrofahrrads 16 ist mittels eines mehrteiligen Verbindungsmittels 228 am Rahmen 20 des Elektrofahrrads 16 befestigt. Die Befestigung erfolgt dabei beispielhaft über eine Verschraubung, insbesondere über die gleiche Schraubverbindung 224, die auch für die Führungsschiene 222 verwendet wird. Das Verbindungsmittel 228 umfasst dabei ein Führungselement 230, das derart ausgebildet ist, dass die Führungskontur der Führungsschiene 222 fortgeführt wird. Das Führungselement 230 des Verbindungsmittels 228 ist aus einem Metall ausgebildet. Alternativ wäre ebenso denkbar, dass Führungselement 230 aus einem Kunststoff auszubilden.

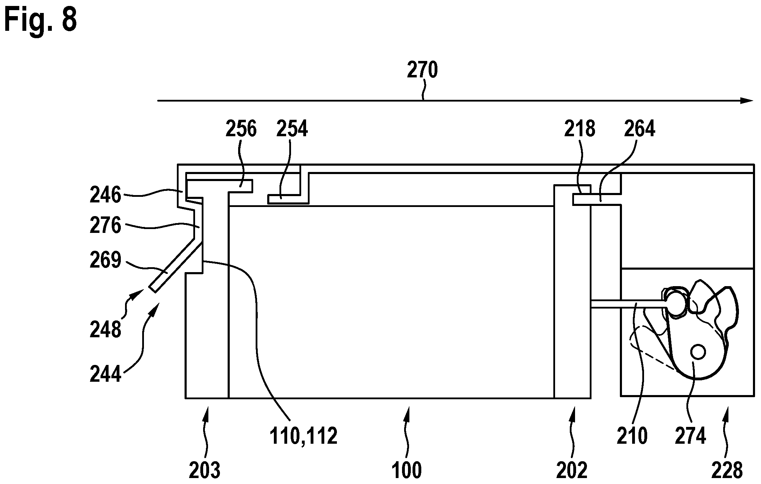

Das Verbindungsmittel 228 umfasst zudem eine Gehäuseeinheit 232, die optional in unterschiedlichen Konfigurationen oder alternativ zu weiteren nicht dargestellten Gehäusemodulen montierbar ist. Der Stecker 226 ist lösbar mit der Gehäuseeinheit 232 verbunden. Insbesondere ist die Gehäuseeinheit 232 auch für andere Stecker ausgelegt, sodass die Verbindungsvorrichtung 200 auch für andere Akkupacks anpassbar ist. Alternativ oder zusätzlich kann die Gehäuseeinheit 232 auch in einer anderen Konfiguration, beispielsweise um 90° gedreht verbaut werden. Das Verbindungsmittel 228 umfasst zudem ein beweglich gelagertes Verriegelungselement 274 (siehe Fig. 8) welches der Verriegelungseinheit 212 der Verbindungsvorrichtung 200 zugeordnet ist. Das Verriegelungselement 274 ist in der Gehäuseeinheit 232 angeordnet. Zudem umfasst die Gehäuseeinheit 232 beispielhaft zwei Steckeraufnahmen 234 zur Aufnahme von weiteren Steckern 236 des Elektrofahrrads 16, über die der Akkupack 100 elektrisch über Kabelelemente mit weiteren Komponenten des Elektrofahrrads 16 verbindbar ist.

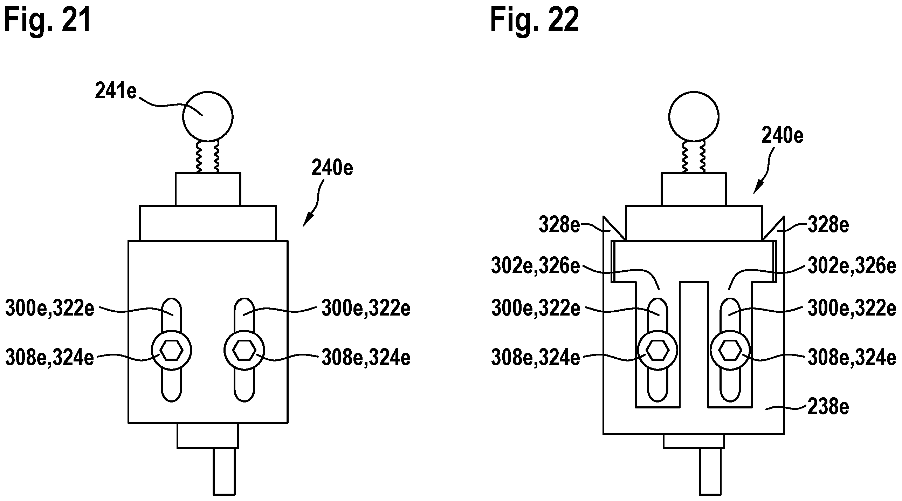

Weiterhin weist die Gehäuseeinheit 232 ein Aufnahmegehäuse 238 für eine Betätigungseinheit 240 auf. Das Aufnahmegehäuse 238 ist vorzugsweise derart ausgebildet, dass es in unterschiedlichen Konfigurationen beziehungsweise Ausrichtungen montierbar ist. Die Betätigungseinheit 240 ist zur Betätigung der Verriegelungseinheit 212 ausgebildet, wobei mittels einer Betätigung der Betätigungseinheit 240 eine Verriegelung zwischen dem Akkupack 100 und dem Elektrofahrrad 16 lösbar ist. Die Betätigungseinheit 240 ist beispielhaft als ein Schloss 242 ausgebildet, das über einen Schlüssel 241 (siehe beispielsweise Fig. 21) betätigbar ist. Die Betätigungseinheit 240 ist mechanisch mit der Verriegelungseinheit 212 gekoppelt.

Zudem umfasst die Verbindungsvorrichtung 200 eine Sicherungseinheit 244, die zur Sicherung des Akkupacks 100 im entriegelten Zustand ausgebildet ist. Die Sicherungseinheit 244 umfasst ein Sicherungselement 246, das an einem weiteren Verbindungsmittel 248 angeordnet ist, wobei das weitere Verbindungsmittel 248 beispielhaft an einer gegenüberliegenden Seite der Führungsschiene 222 mit dieser ebenfalls über eine Schraubverbindung angeordnet ist. Die Sicherungseinheit 244 ist dazu ausgebildet, den Akkupack 100 im entriegelten Zustand zu sichern. Das Sicherungselement 246 ist beispielhaft als eine metallische Blattfeder 250 ausgebildet.

Das weitere Verbindungsmittel 248 umfasst zudem analog zu dem Verbindungsmittel 228 ein Führungselement 252, das zu der Führungsschiene 222 korrespondiert. Zudem umfasst das Verbindungsmittel 248 stirnseitig ein Halteelement 254, wobei der Akkupack 100, insbesondere ein Verbindungsmittel 202 des Akkupacks 100, im verriegelten Zustand durch das Halteelement 254 gehalten wird. Das Halteelement 254 ist als eine stirnseitige Öffnung ausgebildet, die einen im Wesentlichen U-förmigen Querschnitt aufweist.

Die Verriegelungseinheit 212 ist an einem ersten Abschnitt 1, insbesondere an einem vorderen Abschnitt, der Führungseinheit 216 angeordnet. Die Sicherungseinheit 244 ist an einem zweiten Abschnitt 2, insbesondere an einem hinteren Abschnitt, der Führungseinheit 216 angeordnet. Im ersten Abschnitt 1 ist dabei ein Abstand zu der Verriegelungseinheit 212 kleiner als ein Abstand zu der Sicherungseinheit 244. Die Führungseinheit 216 kann dabei wie in dieser Ausführungsform beschrieben mehrere Führungselemente oder alternativ auch nur ein einziges Führungselement aufweisen. Die Länge der Führungseinheit 216 entspricht im Wesentlichen dem größtmöglichen Abstand zwischen den am weitesten entfernten Führungselementen. Die Länge der Führungseinheit 216 entspricht beispielhaft im Wesentlichen einer Länge des Akkupacks 100. Es ist allerdings ebenfalls denkbar, dass der Akkupack 100 nur über einen kleinen Bereich geführt wird, beispielsweise nur 10% seiner Länge oder weniger. Der erste Abschnitt 1 und der zweite Abschnitt 2 der Führungseinheit 216 erstrecken sich insbesondere ausgehend von den unterschiedlichen Enden der Führungseinheit 216.

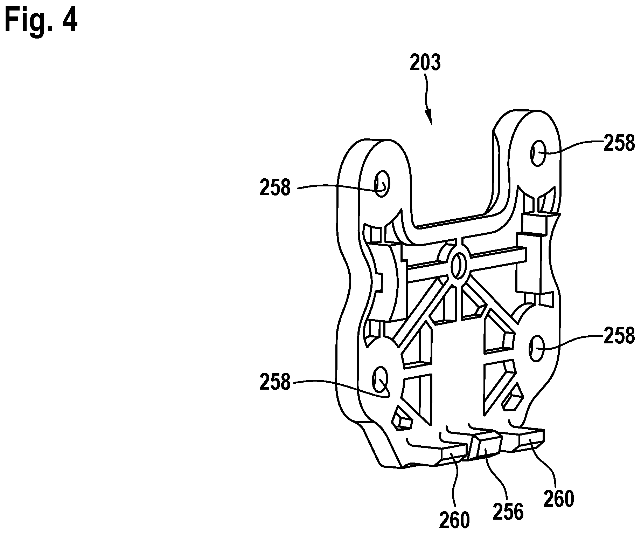

In Fig. 4 ist das zweite oder hintere Verbindungsmittel 203 des Akkupacks 100 mit einem zu dem Halteelement 254 korrespondierenden Eingriffsmittel 256 in einer perspektivischen Ansicht gezeigt. Analog zu dem ersten Verbindungsmittel 202 des Akkupacks 100 umfasst das Verbindungsmittel 203 vier Befestigungselemente 258 in Form von Schraubaufnahmen für Schrauben auf, die zur Verbindung mit der korrespondierenden Endplatte 106 des Akkupacks 100 vorgesehen sind. Das Halteelement 254 erstreckt sich dabei in Richtung des Akkupacks 100 unterhalb des Gehäuses 102 des Akkupacks 100. Benachbart zu dem Halteelement 254 weist das Verbindungsmittel 202 zwei weitere Halteelemente 260 auf, die insbesondere zum Entgegenwirken einer Verkippung des Akkupacks 100 im verbundenen Zustand um die Längsachse des Akkupacks 100 vorgesehen sind. Zudem wird das Eingriffsmittel 256 beim Einführen derart ausgerichtet, dass dieses mittig in das Halteelement 254 eingreift. Dies erfolgt insbesondere durch die weiteren Halteelemente 260, die etwas länger ausgebildet sind und zusätzliche Entformungsschrägen aufweisen.

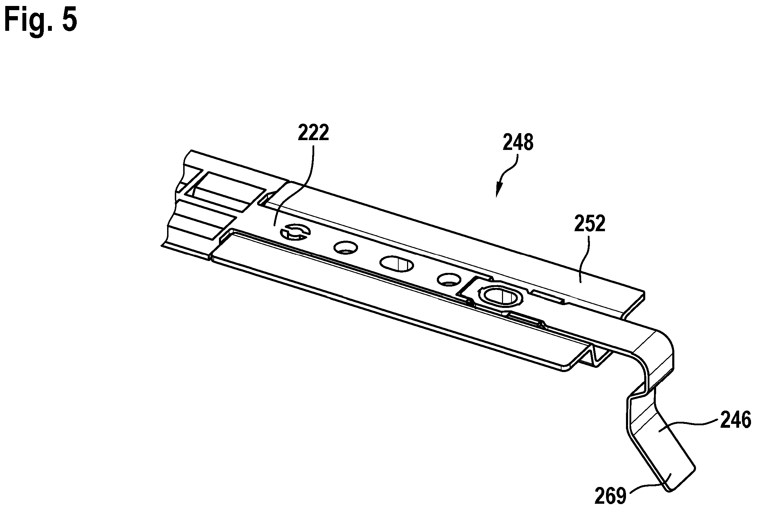

In Fig. 5 ist das mit der Führungsschiene 222 verbundene weitere Verbindungsmittel 248 in einer perspektivischen Ansicht in einer Perspektive ausgehend von dem Rahmen 20 beziehungsweise von unten gezeigt. Das weitere Verbindungsmittel 248 ist beispielhaft derart ausgebildet, dass das Sicherungselement 246 der Sicherungseinheit 244 und das Führungselement 252 der Führungseinheit 216 unabhängig voneinander mit der Führungsschiene 222 und/oder dem Rahmen 20 des Elektrofahrrads 16 verbindbar sind. Das Führungselement 252 wird dabei über die Verschraubung 224 sowohl mit der Führungsschiene 222 als auch mit dem Rahmen 20 verbunden. Das Sicherungselement 246 wird beispielhaft direkt nur an der Führungsschiene 222 über eine kraft- und formschlüssige Verbindung, beispielhaft über ein Einklemmen, verbunden.

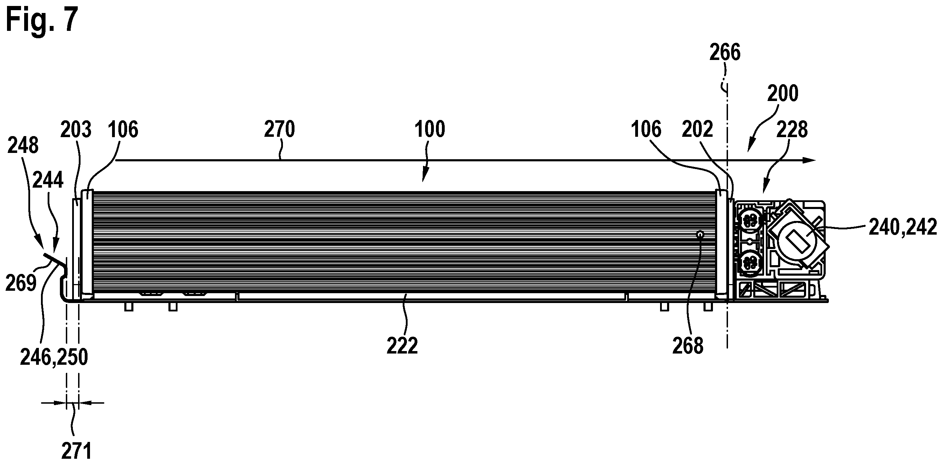

In Fig. 6 ist das Verbindungsmittel 228 der Verbindungsvorrichtung 200 in einer perspektivischen Ansicht gezeigt. Das bewegliche Verriegelungselement 274 ist dabei in einer Aufnahme 262 für das korrespondierende Verriegelungselement 210 an der Verbindungsplatte 204 des Akkupacks 100 angeordnet. Zudem weist das Verbindungsmittel 228 zwei Linearlagerelemente 264 auf, die sich ausgehend von einer ersten Verbindungsebene 266 (siehe Fig. 7), an welcher das Verbindungsmittel 228 des Verbrauchers 14 und das Verbindungsmittel 202 im verriegelten Zustand im Wesentlichen aneinander anliegen, in Richtung des Akkupacks 100 erstrecken und im Querschnitt korrespondierend L-förmig ausgebildet sind. Alternativ sind auch andere Geometrien, beispielhaft rechteckig oder quadratisch denkbar.

In Fig. 7 ist die Verbindungsvorrichtung 200 mit dem Akkupack 100 im verriegelten Zustand in einer Seitanansicht gezeigt.

Zur Verbindung wird der Akkupack 100 relativ zum Elektrofahrrad 16 um ein Verbindungsachse 268 zunächst eingeschwenkt. Die Verbindungsachse 268 ist dabei zur Veranschaulichung an einem Punkt eingezeichnet, wobei toleranzbedingt das Einschwenken auch in einem benachbarten Bereich erfolgen kann. Beim Einschwenken wird das nach außen abstehende Verriegelungselement 210 des Akkupacks 100 in die korrespondierende Aufnahme 262 der Verbindungsvorrichtung 200 im Rahmen 20 des Elektrofahrrads 16 eingeführt. Zudem kann bereits eine teilweise Verbindung der elektrischen Schnittstelle stattfinden.

Nachdem der Akkupack 100 in den Rahmen eingelegt wurde, liegt der Akkupack 100 auf der Führungsschiene 222 auf und kann durch eine Linearbewegung in Verbindungsrichtung 270 in Richtung des Verbindungsmittels 228 verschoben werden. Durch die Relativbewegung in Richtung des Verbindungsmittels 228 wird die Verriegelungseinheit 212 ausgelöst und der Akkupack 100 am Elektrofahrrad 16 verriegelt. Zudem wird die Buchse 109 des Akkupacks 100 mit dem Stecker 226 des Elektrofahrrads 16 verbunden. Die Beweglichkeit des Akkupacks 100 entlang der Verbindungsrichtung 270 ist dabei durch das Verbindungsmittel 228 und das Sicherungselement 246 begrenzt. Das Sicherungselement 246 ist allerdings elastisch ausgebildet und kann durch Beaufschlagung des Sicherungselements 246 mit einer Kraft entgegen der Verbindungsrichtung 270 derart bewegt werden, dass ein Bewegungsraum 271 entlang der Verbindungsrichtung 270 geringfügig vergrößerbar ist. Die Kraft auf das Sicherungselement 246 kann dabei direkt durch den Benutzer über den einstückig mit dem Sicherungselement 246 ausgebildeten Betätigungsbereich 269 erfolgen.

Die Verriegelung kann über eine Betätigung der Betätigungseinheit 240 gelöst werden. Die Betätigungseinheit ist dabei beispielhaft manuell durch das Einführen des Schlüssels in den hierzu vorgesehenen Schlitz des Schlosses 242 betätigbar. Beispielhaft wird durch ein Drehen des Schlüssels im Schloss 242 die Verriegelung gelöst und das beweglich im Verbindungsmittel 228 gelagerte Verriegelungselement derart betätigt, dass der Akkupack 100 entgegen der Verbindungsrichtung 270 ausgeworfen wird.

In Fig. 8 ist der Akkupack im mit der Verbindungsvorrichtung 200 im entriegelten, aber verbundenen Zustand in einer schematischen Ansicht gezeigt. Das beweglich gelagerte Verriegelungselement 274 ist mit einem nicht dargestellten Federelement entgegen der Verbindungsrichtung 270 vorgespannt, sodass der Akkupack 100 beim Übergang vom verriegelten Zustand in den entriegelten Zustand entgegen der Verbindungsrichtung 270 aus dem Verbindungsmittel 228 herausgeschoben wird, bis der Akkupack 100 am Sicherungselement 246 des weiteren Verbindungsmittels 248 anschlägt. Die Sicherungseinheit 244 stellt somit im Wesentlichen eine Sekundärverriegelung bereit. Hierzu ist ein Bereich des Sicherungselements 246 als ein Anschlagelement 276 ausgebildet. Insbesondere weist der Akkupack 100, insbesondere da Verbindungsmittel 203 des Akkupacks 200, ein korrespondierendes Sicherungselement 110 beispielhaft in Form einer beispielhaft rechteckigen Vertiefung 112 auf, in welche das Anschlagelement 276 im verbundenen beziehungsweise im entriegelten Zustand eingreift. Vorteilhaft wird durch die Sicherungseinheit 244 sichergestellt, dass der Akkupack 100 durch das Lösen der Verriegelung nicht ungewollt aus dem Rahmen 20 des Fahrrads herausfällt. Ein Lösen der Verbindung durch ein Ausschwenken ist in diesem Zustand zunächst nicht möglich. Die Verbindungsvorrichtung 200 ist beispielhaft derart ausgebildet, dass der Benutzer zwei Möglichkeiten zum Lösen der Verbindung hat.

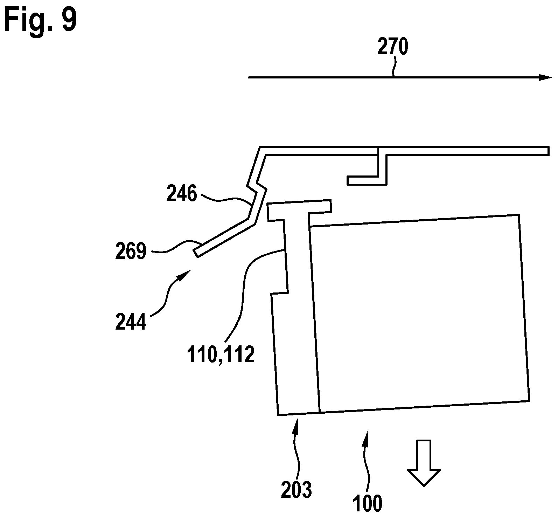

Die erste Möglichkeit ist in Fig. 9 in einer schematischen Ansicht gezeigt. Hierzu drückt der Benutzer mit einer Kraft auf den Betätigungsbereich 269 des Sicherungselements 246 und verschiebt somit das Sicherungselement 246 entgegen der Verbindungsrichtung 270 und vergrößert damit den Bewegungsraum 271 des Akkupacks 100 im verbundenen Zustand. Mittels des vergrößerten Bewegungsraums 271 kann die Verbindung des Akkupacks 100 mit dem Elektrofahrrad 16 gelöst und dieser entnommen werden.

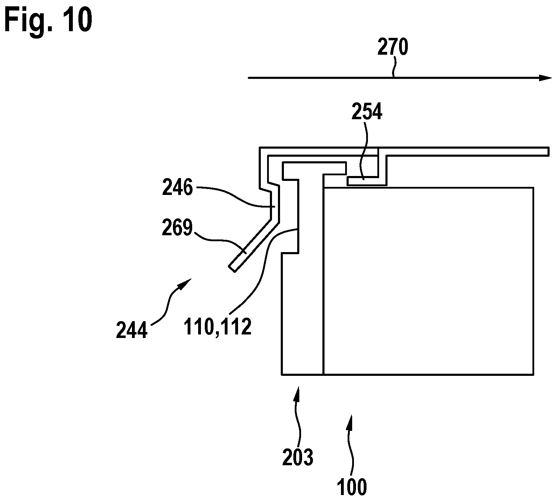

Die zweite Möglichkeit den Akkupack 100 zu entnehmen ist in Fig. 10 in einer schematischen Ansicht gezeigt. Der Akkupack 100 wird hierzu von einem Benutzer um eine kleine Wegstrecke derart in Verbindungsrichtung 270 und entgegen der Federkraft des Federelements des drehbar gelagerten Verriegelungselements 274 bewegt, dass weder das Sicherungselement 246 noch das Halteelement 254 des Verbindungsmittels 248 einen Kraft- und/oder Formschluss mit dem Akkupack 100, insbesondere dem Verbindungsmittel 203 des Akkupacks 100, bildet und somit der Akkupack 100 ausschwenkbar ist.

Es ist ebenso denkbar, dass die Verbindungsvorrichtung 200 derart ausgebildet ist, dass nur eine dieser Möglichkeiten besteht. Beispielhaft durch ein nicht bewegliches Sicherungselement 246 oder durch eine Anordnung des Sicherungselements 246 und des Halteelements 254, die derart gestaltet ist, dass nur durch eine Betätigung des Sicherungselements 246 ein Lösen möglich ist.

Die in Fig. 1 bis Fig. 10 beschriebene Verbindungsvorrichtung 200 ist für eine Verbindung des Akkupacks 100 über eine Schwenkbewegung in den Rahmen 20, beispielhaft in das Unterrohr des Rahmens 20, ausgebildet. Im Anschluss an die Schwenkbewegung wird diese durch eine Linearbewegung entlang der Verbindungsrichtung 270 ergänzt, um den Akkupack 100 mit dem Elektrofahrrad 16 mechanisch und elektrisch zu verbinden und zu verriegeln. Der Rahmen 20 weist hierzu eine seitliche Öffnung (nicht dargestellt), beispielsweise auf der Unterseite aus. Die Länge dieser Öffnung entspricht dabei insbesondere im Wesentlichen der Länge des Akkupacks 100.

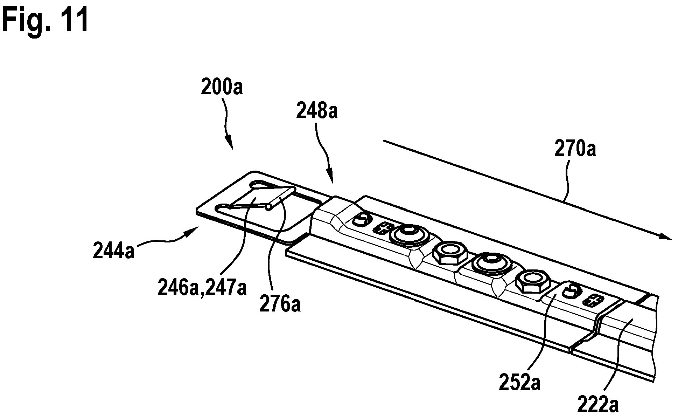

In Fig. 11 ist eine alternative Ausführungsform der zuvor beschriebenen Sicherungseinheit 244 in einer perspektivischen Teilansicht gezeigt. Diese alternative Ausführungsform ist dabei für Rahmen von Elektrofahrrädern vorgesehen, bei denen der Akkupack 100 nicht seitlich eingeschwenkt, sondern nur linear eingeschoben wird. Dies kann beispielhaft über eine Öffnung des Rahmens im Bereich der Antriebseinheit erfolgen. Vorteilhaft kann mit der angepassten Sicherungseinheit 244 die Verbindungsvorrichtung 200 ohne weitere Anpassungen im Bereich der Verbindungsmittel 202, 203 am Akkupack 100 und ohne Anpassungen am vorderen Verbindungsmittel 228 erfolgen.

Die Sicherungseinheit 244a umfasst ein alternatives Sicherungselement 246a, das beispielhaft wie zuvor beschrieben einem Verbindungsmittel 248a zugeordnet ist, welches mit einer Führungsschiene 222a verbunden ist. Das Verbindungsmittel 248a umfasst dabei wie zuvor beschrieben ein Führungselement 252a zur Führung des Akkupacks 100 beim Verbindungsprozess entlang oder entgegen der Verbindungsrichtung 270a.

Das Sicherungselement 246a ist beispielhaft metallisch ausgebildet, wobei es auch denkbar ist, das Sicherungselement 246a aus einem anderen Werkstoff, beispielhaft aus Kunststoff, anzufertigen. Das Sicherungselement 246a ist als ein federnder Anschlag 247a ausgebildet und weist ein Anschlagelement 276a auf. Das Anschlagelement 276a ist beispielhaft an einer Spitze des Sicherungselements 246a angeordnet. Das Sicherungselement 246a ist derart ausgebildet, dass das Anschlagelement 276a durch Beaufschlagung mit einer Kraft quer zur Verbindungsrichtung 270a nach unten, insbesondere in Richtung der Führungsschiene 222a, bewegbar ist.

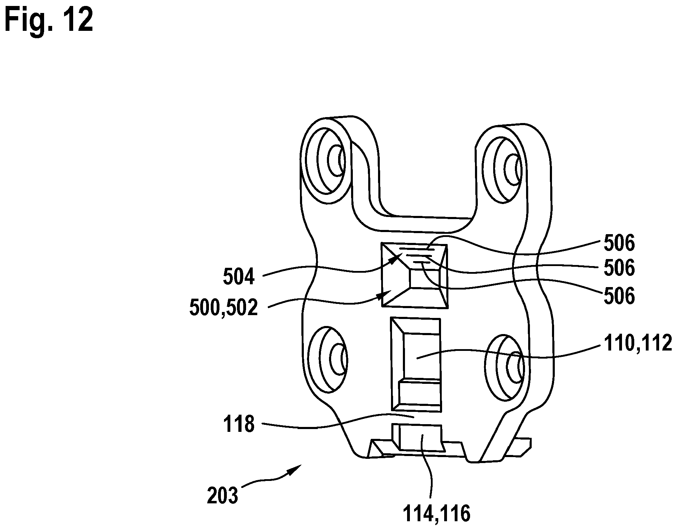

In Fig. 12 ist eine perspektivische Ansicht des Verbindungsmittels 203 des Akkupacks 100, das zur Verbindung mit der Sicherungseinheit 244a im entriegelten Zustand vorgesehen ist.

Das Verbindungsmittel 203 weist neben dem bereits beschriebenen Sicherungselement 110, welches im Wesentlichen mittig im Verbindungsmittel 203 angeordnet ist, ein zweites Sicherungselement 114 auf. Das zweite Sicherungselement 114 ist dabei für das Sicherungselement 246a des alternativen Sicherungseinheit 244a vorgesehen. Vorteilhaft kann somit das Verbindungsmittel 203 für beide Sicherungseinheit 244, 244a verwendet und somit der Akkupack 100 nach Bedarf angepasst werden. Das zweite Sicherungselement 114 ist beispielhaft ebenfalls als eine rechteckige Vertiefung 116 ausgebildet. Das erste Sicherungselement 110 und das zweite Sicherungselement 114 sind beispielhaft über eine Trennwand 118 voneinander getrennt. Die Trennwand 118 bildet zumindest für das Sicherungselement 246a der alternativen Sicherungseinheit 244a eine zusätzliche Gegenkontur.

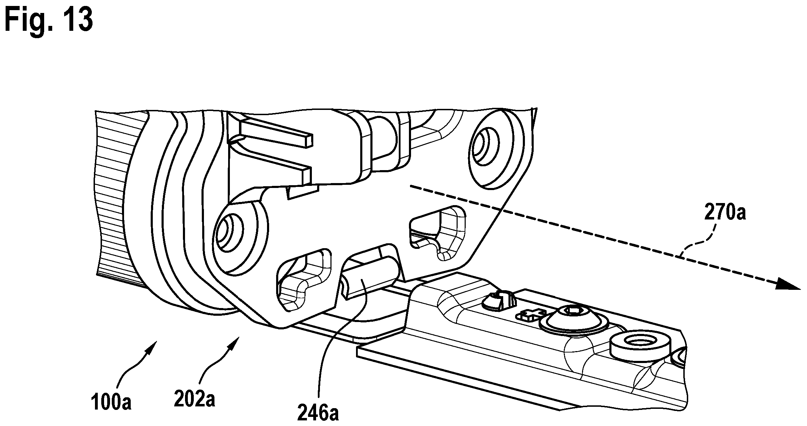

In Fig. 13 ist der Akkupack 100 zu Beginn des Verbindungsprozess gezeigt, in welchem der Akkupack 100 mit dem Verbindungsmittel 202a voraus in den Rahmen des Elektrofahrrads geschoben wird. Das Sicherungselement 246a ist derart ausgebildet, dass dieses auch ohne Beaufschlagung mit einer Kraft eine kleinere Höhe als die Führungsschiene 222a aufweist und somit niedriger liegt als die Führungsschiene 222a. Der Akkupack 100 kann somit ohne zusätzlichen Krafteintrag eingeschoben werden. Es wäre allerdings auch denkbar, dass das Sicherungselement 246a höher ausgebildet ist und beim Verbindungsvorgang durch den Akkupack 100 heruntergedrückt wird. Um die Sicherung leichter zu Lösen weist das Anschlagelement 276a bevorzugt eine abgerundete Anschlagfläche auf. Das Lösen kann dabei manuell über eine direkte Betätigung des Sicherungselements 246a durch den Benutzer mit einem Finger oder indirekt über den Akkupack 100 beim Aufbringen einer Kraft entgegen der Verbindungsrichtung 270a.

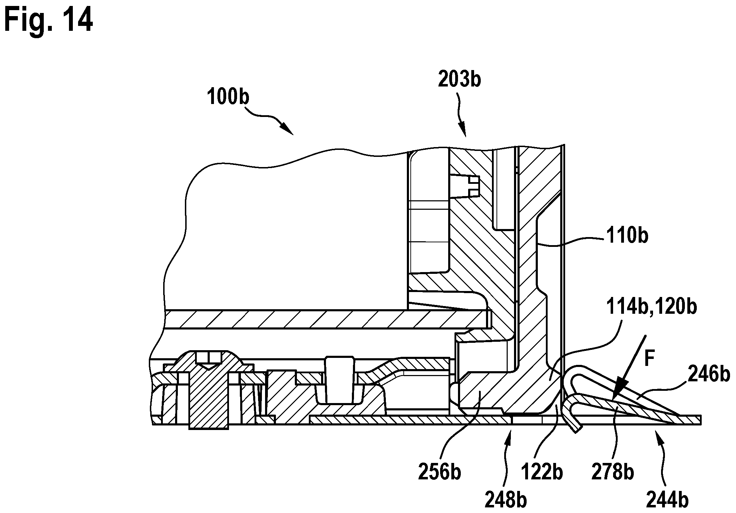

In Fig. 14 ist eine alternative Ausführungsform des Verbindungsmittels 203b in einem Längsschnitt in einem entriegelten und gesicherten Zustand gezeigt. Das Verbindungsmittel 248a des Elektrofahrrads entspricht dabei dem zuvor beschriebenen Verbindungsmittel 248a mit der alternativen Sicherungseinheit 244a.

Das Verbindungsmittel 203b weist analog zu der vorherigen Ausführungsform ein erste Sicherungselement 110b und ein zweites Sicherungselement 114b auf. Das zweite Sicherungselement 114b unterscheidet sich dabei dadurch, dass das zweite Sicherungselement 114b als eine ebene Anschlagfläche 120b ausgebildet ist, die benachbart zu einer Schräge 122b angeordnet ist, entlang der das Sicherungselement 246a beim Lösen der Sicherung geführt wird.

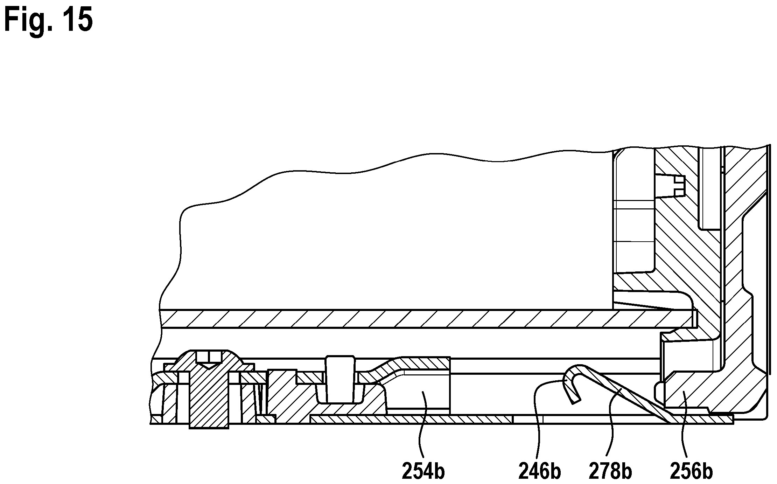

In Fig. 15 ist das Verbindungsmittel 203b zu Beginn des Verbindungsvorgangs in einem Längsschnitt gezeigt. Während das vordere Verbindungsmittel 202 im Bereich der elektrischen Schnittstelle 108 des Akkupacks 100 ohne Beaufschlagung des Sicherungselements 246a verbindbar ist, wird das Sicherungselement 246a beim Einführen durch das zuvor beschriebene Eingriffsmittel 256b betätigt, wobei das Sicherungselement 246a hierzu eine Einfuhrschräge 278a aufweist.

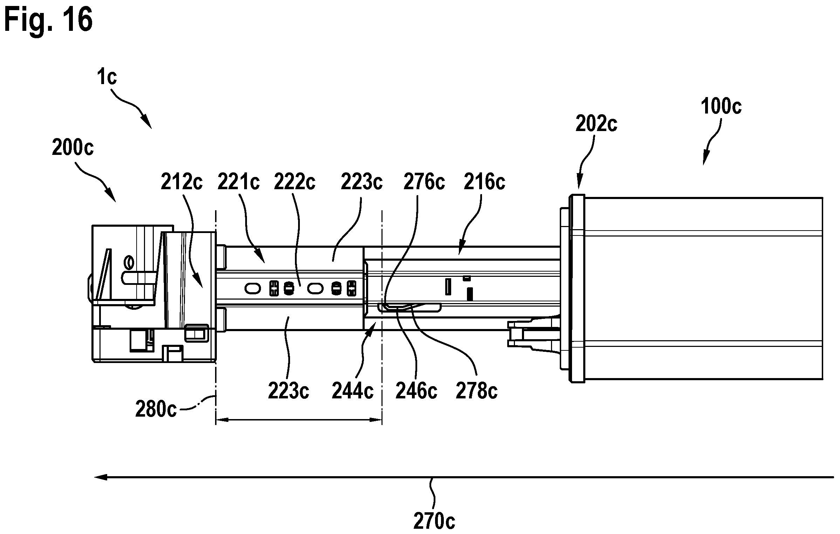

In Fig. 16 ist eine weitere Ausführungsform der Sicherungseinheit 244c in einer Draufsicht gezeigt. Die Sicherungseinheit 244c ist wie in den unmittelbar zuvor beschriebenen Ausführungsformen für linear beziehungsweise rein axial aufgenommene Akkupacks 100 vorgesehen.

Das Sicherungselement 246c der Sicherungseinheit 244c ist im Gegensatz zu den vorherigen Sicherungselementen 246c nicht im zweiten Abschnitt 2 der Führungseinheit 216c, sondern im ersten Abschnitt 1 der Führungseinheit 216c angeordnet. Dadurch weist die die Sicherungseinheit 244c einen Abstand 280c von der Verriegelungseinheit 212c auf, der kleiner als 50% der Länge des Akkupacks 100 ist.

Das Sicherungselement 246c ist als ein Federelement, beispielhaft als einer Drahtfeder, ausgebildet. Das Sicherungselement 246c ist dabei derart ausgebildet, dass bei einer Beaufschlagung des Sicherungselements 246c durch den Akkupack 100 die Reibungskraft zwischen der Führungseinheit 216c und dem Akkupack 100 vergrößert wird. Das Sicherungselement 246c und der Akkupack 100 sind dabei derart ausgebildet, dass die Reibungskraft in Verbindungsrichtung 270c größer als in die entgegengesetzte Entnahmerichtung ausgebildet ist. Beispielhaft weist das Sicherungselement 246c eine Einfuhrschräge 278c auf die relativ zur Verbindungsrichtung 270c eine geringere Steigung aufweist als das ebenfalls als eine Schräge ausgebildete Anschlagelement 276c.

Das Sicherungselement 246c ist auf der Unterseite der Führungsschiene 222c montiert und ragt beispielhaft in die Führungsnut 223c einseitig seitlich hinein. Beim Verbinden oder Lösen des Akkupacks 100 wird das Sicherungselement 246c durch die axiale Bewegung des Akkupacks 100 in die Führungsschiene 222c hineingedrückt und dadurch bewegt.

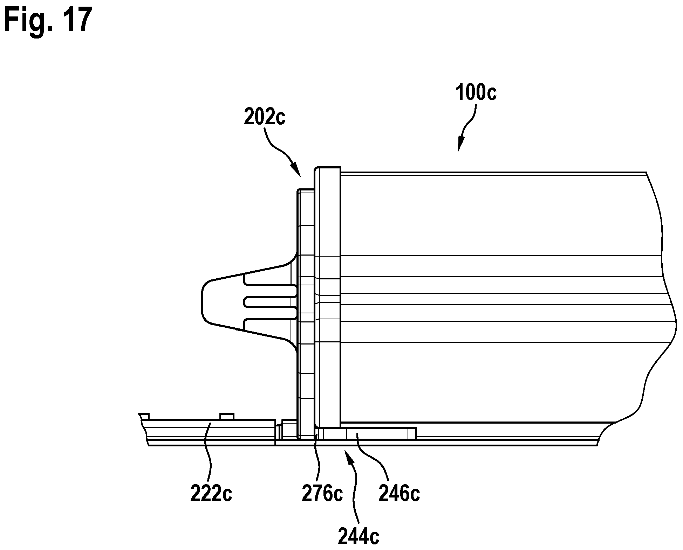

In Fig. 17 ist eine Seitenansicht des Akkupacks 100 im entriegelten aber durch die Sicherungseinheit 244c gesicherten Zustand gezeigt. Der Akkupack 100 wird dabei durch die Verriegelungseinheit 212c derart ausgeworfen, dass der Akkupack 100, insbesondere das Verbindungsmittel 202 des Akkupacks 100, am Sicherungselement 246c, insbesondere am Anschlagelement 276c, zum Anliegen kommt und durch das Sicherungselement 246c gehalten wird. Hierzu ist das Verbindungsmittel 202 insbesondere derart geformt, dass es den Außendurchmesser des Akkupacks 100 bereichsweise vergrößert. Zum Lösen der Sicherung wird der Akkupack 100 durch den Benutzer gegriffen und entgegen der Verbindungsrichtung 270c gezogen.

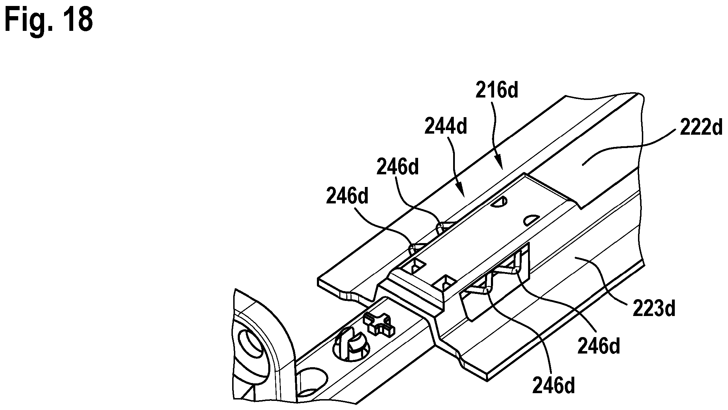

In Fig. 18 ist eine weitere alternative Ausführungsform der Sicherungseinheit 244c in einer perspektivischen Ansicht gezeigt. Die Sicherungseinheit 244d ist dabei ebenfalls für die rein axiale/lineare Verbindung vorgesehen und im ersten Abschnitt 1 der Führungseinheit 216d angeordnet. Die Sicherungseinheit 244d umfasst dabei vier Sicherungselemente 246d, die als metallische Blattfedern ausgebildet sind. Die Sicherungselemente 246d sind beispielhaft mit der Führungsschiene 222d verbunden und ragen in die zwei gegenüberliegenden Führungsnuten 223d hinein.

Um eine modulare Lösung für unterschiedliche Rahmengeometrien und Verbauarten von unterschiedlichen Elektrofahrrädern zu ermöglichen ist die Verbindungsvorrichtung 200 gemäß Fig. 6 derart ausgebildet, dass die Betätigungseinheit 240 in unterschiedlichen Anordnungen relativ zur Führungseinheit 216 und/oder relativ zur Verriegelungseinheit 212 montierbar ist. Zum einen ist die Betätigungseinheit 240 in dem Aufnahmegehäuse 238 aufgenommen. Alternativ und nicht dargestellt ist es ebenso möglich, die Betätigungseinheit 240 um 90° verdreht und ohne das Aufnahmegehäuse zu verbinden, sodass das Schloss 242 nicht wie dargestellt seitlich sondern nach oben gerichtet ist. Da die Rahmen der Elektrofahrräder in der Regel eine Öffnung im Rahmen zur Betätigung des Schlosses brauchen, ist die Möglichkeit die Ausrichtung der Betätigungseinheit 240 modular anzupassen sehr vorteilhaft. Hierzu kann auf der Betätigungseinheit ein weiteres Bauteil montiert werden, das auf die bestehende Entriegelungsschnittstelle geschoben wird und eine Umlegung durch eine Schräge auf eine weitere Entriegelungsschnittstelle ermöglicht.

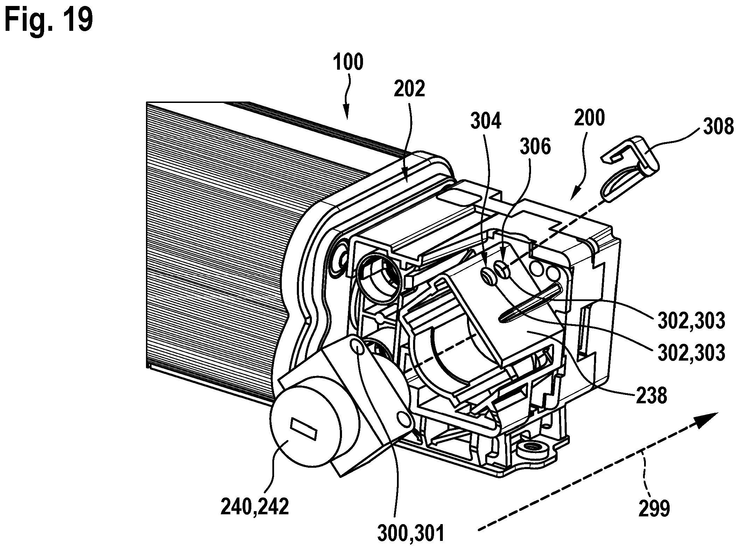

Um die Betätigungseinheit 240 beziehungsweise das Schloss 242 nicht nur auf unterschiedlichen Seiten, sondern auch in unterschiedlichen Einbautiefen anordnen zu können, ist die Verbindungsvorrichtung 200 derart ausgebildet, dass die Betätigungseinheit 240 an einer ersten Position 304 und an einer zweiten Position 304 innerhalb des Aufnahmegehäuses 238 entlang der Aufnahmerichtung 299 fixierbar ist, wie in Fig. 19 zu sehen.

Die Betätigungseinheit 240 weist hierzu ein erstes Verbindungselement 300 auf, das beispielhaft als eine kreisförmige Bohrung 301 ausgebildet ist. Das Aufnahmegehäuse 238 für die Betätigungseinheit 240 weist zwei zweite Verbindungselemente 302 auf, die beispielhaft als kreisförmige Aussparungen 303 ausgebildet sind.

Das Verbindungselemente 300, 302 sind dabei derart angeordnet, dass bei einem geradlinigen Einschieben der Betätigungseinheit 240 in das Aufnahmegehäuse 238 zunächst das vordere zweite Verbindungselement 302 mit dem ersten Verbindungselement 300 in der ersten Position 304 überlappt und bei einem weiteren Einschieben das hintere zweite Verbindungselement 302 in der zweiten Position 306 mit dem ersten Verbindungselement 300 überlappt.

Zudem weist die Verbindungsvorrichtung 200 ein Positionierungselement 308 auf, dass zur Fixierung der Betätigungseinheit 240 im Aufnahmegehäuse 238 in der ersten Position 304 und in der zweiten Position 306 ausgebildet ist, wobei die Betätigungseinheit 240 in der zweiten Position 306 ein größere Einbautiefe aufweist als in der ersten Position 304 aufweist.

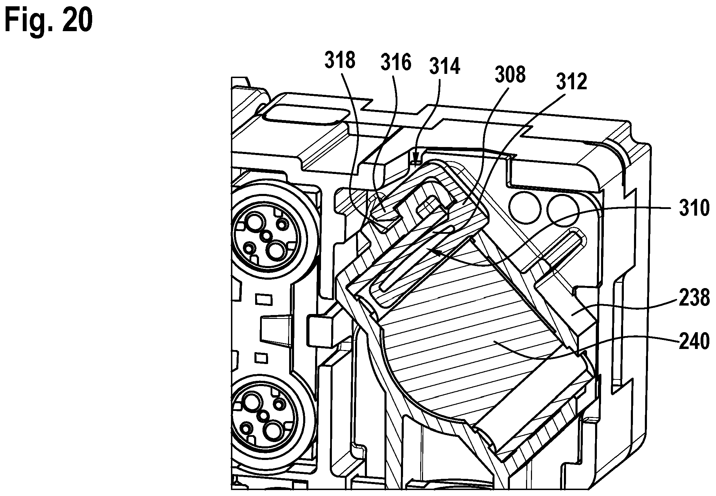

In Fig. 20 ist ein Querschnitt durch die Verbindungsvorrichtung 200 bei einer Betätigungseinheit 240 im in der zweiten Position 306 fixierten Zustand gezeigt.

Das Positionierungselement 308 weist einen Fixierabschnitt 310 zur Fixierung des Positionierungselements 308 in der Betätigungseinheit 240 auf. Der Fixierabschnitt 310 ist beispielhaft im Wesentlichen stiftförmig ausgebildet und weist einen Federarm 312 auf, der im verbundenen Zustand eingedrückt ist und dadurch eine fixierende Vorspannkraft ausgebildet. Durch die Vorspannkraft entsteht ein Kraftschluss zwischen dem Positionierungselement 308 und dem ersten Verbindungselement 300 und dem Positionierungselement 308.

Zudem weist das Positionierungselement 308 einen Halteabschnitt 314 auf, das zur Befestigung des Positionierungselements 308 am Aufnahmegehäuse 238 ausgebildet ist. Der Halteabschnitt 314 ist beispielhaft als ein Rasthaken 316 ausgebildet, der zur Verbindung mit einer korrespondierenden Rastkontur 318 an der Außenfläche des Aufnahmegehäuses 238 ausgebildet ist. Der Halteabschnitt 314 und der Fixierabschnitt 310 sind über einen vorzugsweise elastischen Verbindungssteg 320 miteinander verbunden.

Zur Positionierung der Betätigungseinheit 240 im Aufnahmegehäuse 238 wird zunächst die Betätigungseinheit 240 linear in das Aufnahmegehäuse 238 bis zur ersten Position 304 oder bis zu zweiten Position 306 eingeschoben. Im Anschluss wird das Positionierungselement 308 mit dem Fixierabschnitt 310 voraus durch das zweite Verbindungselement 302 des Aufnahmegehäuses 238 in das erste Verbindungselement 300 der Betätigungseinheit 240 hineingeschoben. Die Einschubbewegung endet dabei mit dem Einschnappen des Halteabschnitts 314 des Positionierungselements 308 in die korrespondierende Rastkontur 318 am Aufnahmegehäuse 238. Zum Lösen der Verbindung kann der elastische Halteabschnitt 314 nach von einem Benutzer nach außen gebogen werden, um nach Lösen des Formschlusses das Positionierungselement 308 herauszuziehen.

In Fig. 21 ist eine alternative Ausführungsform einer Betätigungseinheit 240e gezeigt, die ebenfalls in unterschiedlichen Positionen in einem alternativen Aufnahmegehäuse 238e (siehe Fig. 22) für die Betätigungseinheit 240e fixierbar ist.

Im Unterschied zu den zwei diskreten Positionen im vorherigen Ausführungsbeispiel ist in dieser Ausführungsform eine stufenlose Einstellung der Position der Betätigungseinheit 240e im Aufnahmegehäuse 238e möglich. Die Betätigungseinheit 240e umfasst beispielhaft zwei erste Verbindungselemente 300e in Form von Langlöchern 322e, wobei in den Langlöchern 322e jeweils ein Positionierungselement 308e in Form einer Schraube 324e angeordnet ist. Die Positionierungselemente 308 sind dabei im unbefestigten Zustand zunächst beweglich im Langloch 322e angeordnet.

Das Aufnahmegehäuse 238e umfasst beispielhaft zwei zweite Verbindungselemente 302e, die ebenfalls als Langlöcher 326e ausgebildet sind, wobei die Langlöcher 326e des Aufnahmegehäuses 238e in ihrer Positionierung und Dimension zu den Langlöchern 322e der Betätigungseinheit 240e korrespondieren. Des Weiteren umfasst das Aufnahmegehäuse 238e zwei Fixierelemente 328e zur Verklemmung der Betätigungseinheit 240e am Aufnahmegehäuse 238e.

Im verbundenen Zustand kann die Betätigungseinheit 240e innerhalb der durch die Fixierelemente 328e gesetzten Grenzen relativ zu dem Aufnahmegehäuse 238e linear verschoben und durch die Schrauben 324e fixiert werden.

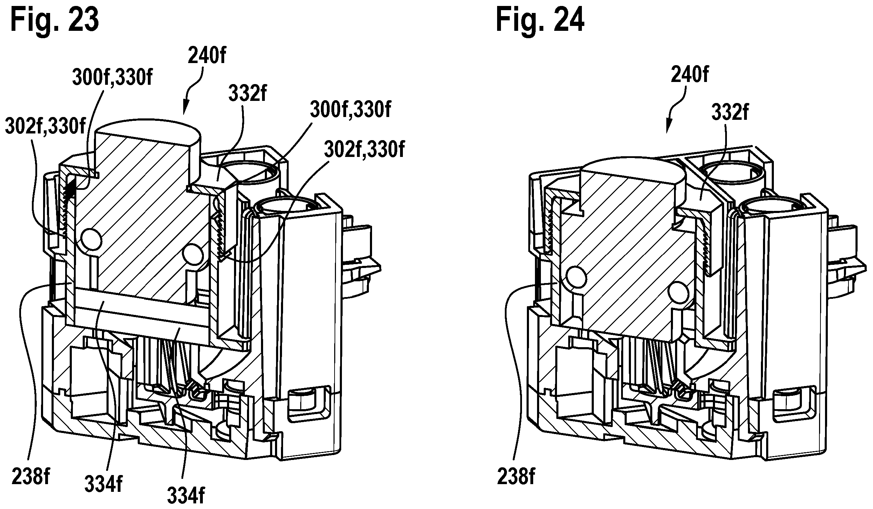

In Fig. 23 und in Fig. 24 ist eine weitere alternative Ausführungsform eines Aufnahmegehäuses 238f und einer Betätigungseinheit 240f gezeigt, die in unterschiedlichen Positionen zueinander fixierbar sind. Im Unterschied zu den vorherigen Ausführungsformen sind dabei die ersten Verbindungselemente 300f der Betätigungseinheit 240f und die zweiten Verbindungselemente 302f des Aufnahmegehäuses 238f direkt miteinander verbindbar und es wird kein zusätzliches Positionierungselement benötigt.

Die Verbindungselemente 300f, 302f weisen dabei jeweils eine Vielzahl von Rastelementen 330f, beispielhaft zehn Rastelemente 330f, auf. Vorteilhaft kann die Betätigungseinheit 240f dadurch in zehn unterschiedlichen Positionen im Aufnahmegehäuse 238f aufgenommen werden.

Die ersten Verbindungselemente 300f sind beispielhaft an einer innenliegenden Seite einer Kappe 332f angeordnet, die fest mit der Betätigungseinheit 240f verbunden ist. Die Kappe 332f und die Betätigungseinheit 240f können dabei einstückig ausgebildet sein. In dieser Ausführungsform erfolgt die feste Verbindung beispielsweise über einen Stoffschluss durch Verkleben. Vorteilhaft kann dadurch die Betätigungseinheit 240 gemäß Fig. 19 durch die Kappe 332f für weitere Konfigurationen angepasst werden. Die zweiten Verbindungselemente 302f sind auf einer Außenseite des Aufnahmegehäuses 238f angeordnet.

In Fig. 23 ist die Betätigungseinheit 240f beispielhaft in einer mittleren Position und in Fig. 24 in einer Endposition mit eine größtmöglichen Einbautiefe befestigt. Zur besseren Lagerung werden dabei beispielhaft zwei Abstandshalter 334f verwendet, die in das Aufnahmegehäuse 238f vor Montage der Betätigungseinheit 240f eingesetzt werden und auf denen die Betätigungseinheit 240f aufliegt. Die Abstandshalter 334f können beispielsweise elastisch aus einer Weichplastik oder auch aus einer Hartplastik ausgebildet sein. In der Endposition ist vorzugsweise kein Einsatz von Abstandshaltern 334f nötig.

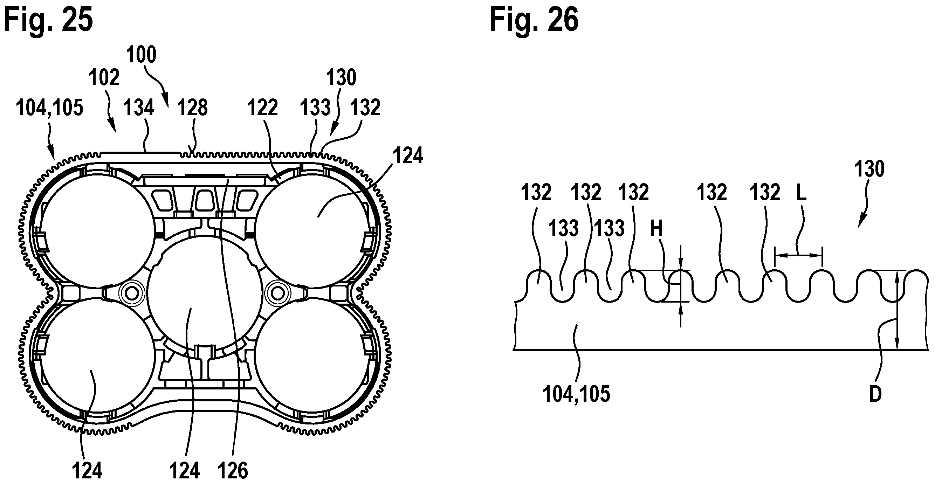

In Fig. 25 ist das Gehäuse 102 des Akkupacks 100 in einem Querschnitt gezeigt. In dem Gehäuse 102 ist ein Zellenhalter 122 zur Aufnahme der Akkuzellen 124 angeordnet. Beispielhaft sind im Gehäuse 102 des Akkupacks 100 fünf Akkuzellen 124 nebeneinander angeordnet. Der Zellenhalter 122 weist Einzelzellenaufnahmen zur einzelnen Aufnahme von den Akkuzellen 124 auf. Zudem ist im Gehäuse 102 des Akkupacks 100 eine Leiterplatte 126 angeordnet, die einem Batteriemanagementsystem zugeordnet ist.

Im Querschnitt betrachtet folgt die Kontur des mittleren Gehäuseteils 105 des Akkupacks 100 im Wesentlichen der Form des Zellenhalters 122 beziehungsweise der Akkuzellen 124.

Das Gehäuse 102, insbesondere das mittlere Gehäuseteil 105, weist auf seiner Außenfläche 128 eine Rippenstruktur 130 auf. Die Rippenstruktur 130 umfasst dabei eine Vielzahl an Rippen 132 zwischen denen jeweils eine Nut 133 angeordnet ist. Die Rippen 132 erstrecken sich parallel zueinander und beispielhaft geradlinig entlang der gesamten Länge des mittleren Gehäuseteils 105. Vorteilhaft wird durch die Rippenstruktur 130 die Oberfläche des Gehäuses 102 vergrößert und dadurch die Abfuhr von Wärme aus dem inneren des Gehäuses 102 nach außen verbessert. Beispielhaft nimmt die Rippenstruktur einen Anteil von über 80% der Außenfläche 128 des Gehäuse 102 ein.

Das mittlere Gehäuseteil 105 besteht beispielhaft aus einem Kunststoff, insbesondere aus einer Hartplastik. Die Rippenstruktur 130 ist vorzugsweise einstückig mit dem Gehäuse 102, insbesondere dem mittleren Gehäuseteil 105, des Akkupacks 100 ausgebildet. Die Rippenstruktur 130 deckt vorzugsweise die gesamte Außenfläche 128 des mittleren Gehäuseteils 105 ab. Allerdings kann das Gehäuse 102 fertigungsbedingt oder als Platzhalter für Produkthinweise auch freie Flächen 134 aufweisen, die keine Rippenstruktur 130 umfassen.

Der Abstand zwischen dem mittleren Gehäuseteil 105 und dem Zellenhalter 122 ist dabei vorzugsweise kleiner als eine Dicke D des Gehäuseteils 104. Ein Ausschnitt der Rippenstruktur gemäß Fig. 24 ist in Fig. 26 in einem Querschnitt gezeigt.

Die Rippen 132 weisen dabei eine Höhe H und einen Abstand L voneinander auf. Der Abstand L ist dabei beispielhaft im Wesentlichen gleichmäßig ausgebildet. Beispielhaft ist die Rippenstruktur 130 derart ausgebildet, dass ein Verhältnis zwischen der Höhe H der Rippen 132 und der Dicke D der Rippen 132 ungefähr 0,4 beträgt.

Zudem ist der Abstand L der Rippen 132 voneinander derart gewählt, dass dieser kleiner als 20% eines Durchmessers der Akkuzellen 124 ist. Dies hat weiterhin einen positiven Effekt auf die Robustheit des Akkupacks 100, da durch eine Verformung der Vielzahl an Rippen 132 im Falle eines Sturzes die mechanische Energie wirksam vom Gehäuse 102 des Akkupacks 100 durch Verformung der Rippen 132 aufgenommen wird. Vorteilhaft ist die Rippenstruktur 130 auch in den gekrümmten Bereichen der Außenfläche 128 angeordnet, in welcher sich die benachbarten Rippen voneinander weg erstrecken und insbesondere den Wärmetransport weiter optimieren.

Die Rippen 132 und die Nuten 133 weisen beispielhaft eine runde Kantenform auf.

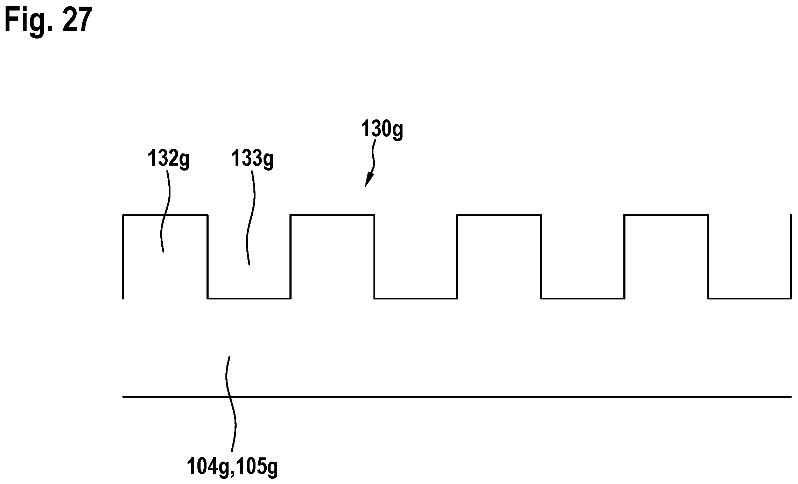

In Fig. 27 ist ein alternatives Profil einer Rippenstruktur 130g in einem Teilquerschnitt gezeigt. Die Rippenstruktur 130g weist dabei eckige Rippen 132g und eckige Nuten 133g auf.

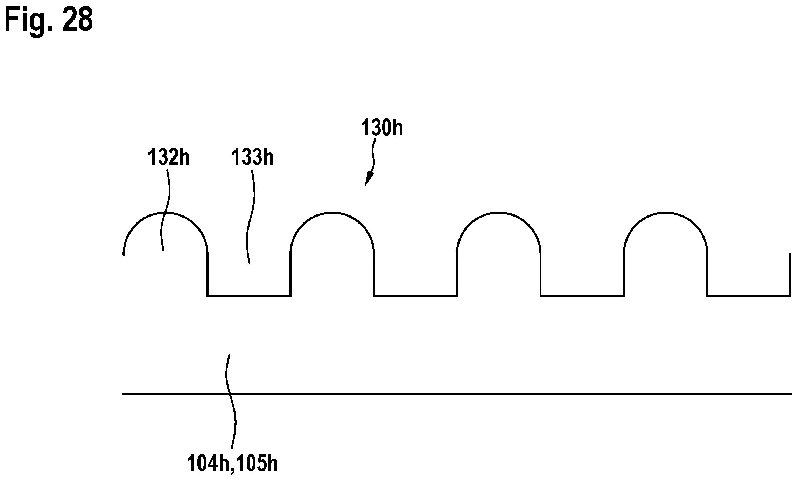

In Fig. 28 ist ein weiteres alternatives Profil einer Rippenstruktur 130h gezeigt, wobei die Rippen 132h runde Kanten und die Nuten 133h eckige Kanten aufweisen. Es wäre ebenso denkbar, dass die Rippen 132h eckige Kanten und die Nuten 133h runde Kanten aufweisen.

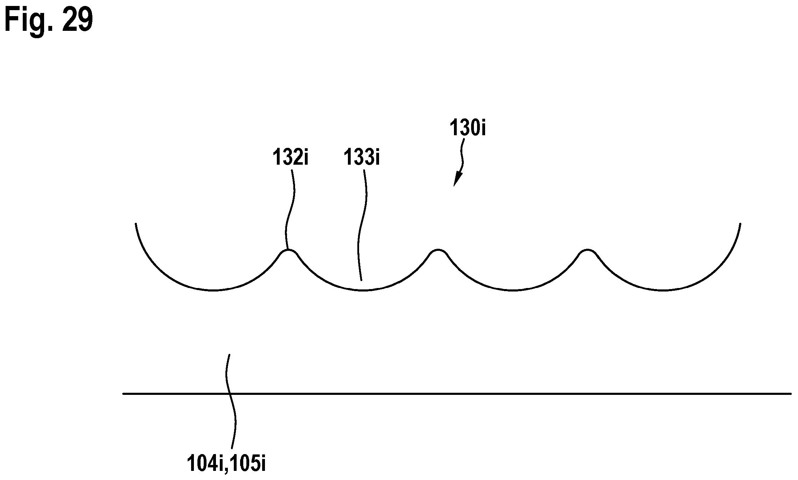

In Fig. 29 ist ein weiteres alternatives Profil einer Rippenstruktur 130i gezeigt, bei der die Rippen 132i eine deutlich kleinere Breite aufweisen als die Nuten 133i und sich somit für den Betrachter eine im Wesentlichen konvexe Gestalt der Rippenstruktur 130i bildet.

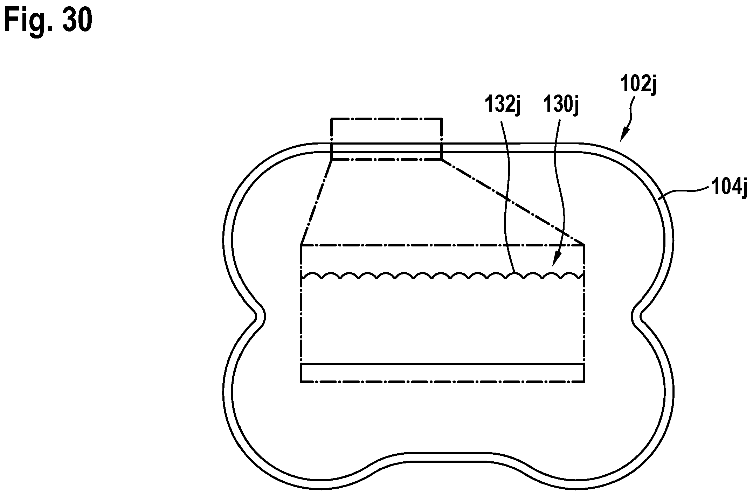

In Fig. 30 ist ein Gehäuseteil 104j eines Gehäuses 102j für einen Akkupack in einem Querschnitt gezeigt, welches ein weiteres alternatives Profil einer Rippenstruktur 130j aufweist. Das Profil weist eine im Wesentlichen konvexe Form auf, die aufgrund der im Verhältnis zu der Dicke D des Gehäuseteils 104 geringen Höhe H der Rippen 132j kaum zu sehen ist, allerdings dennoch einen vorteilhaften Effekt hat.

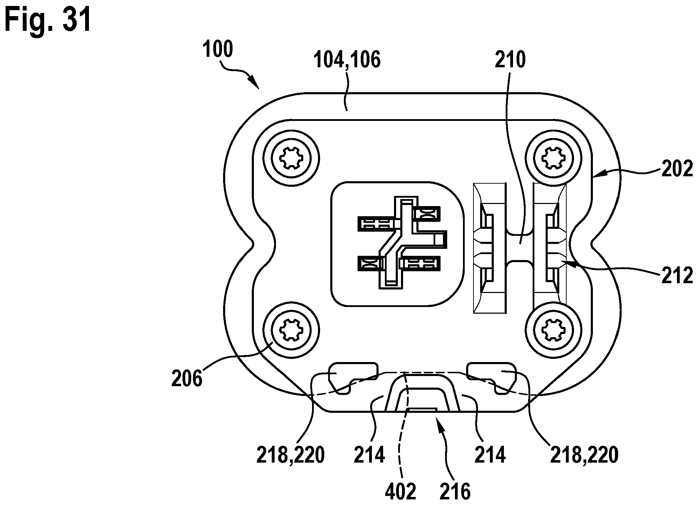

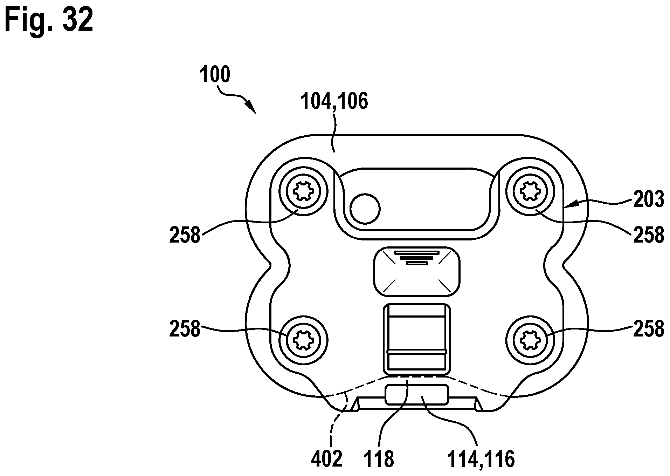

Die Verbindungsmittel 202, 203 des Akkupacks 100 weisen jeweils zumindest einen Funktionsabschnitt 400 auf, der im mit dem Akkupack 100 verbundenen Zustand über das mit dem Verbindungsmittel 202,203 verbundene Gehäuseteil 104 des Akkupacks 100 hinausragt. Die Verbindungsmittel 202, 203 sind in Fig. 31 und in Fig. 32 in einer Draufsicht im mit dem Gehäuse 102 des Akkupacks 100 verbundenen Zustand gezeigt. Die Funktionsabschnitte 400 liegen dabei unterhalb einer Konturlinie 402 des Akkupacks 100, welche die Kontur des Akkupacks 100, insbesondere des mittleren Gehäuseteils 105 des Akkupacks 100, nachbildet.

Durch die Verbindung des Akkupacks 100 mit den Verbindungsmitteln 202,203 wird die Außenkontur des Akkupacks 100 stets in zumindest eine Richtung vergrößert. Beispielhaft ist in der vorliegenden Ausführungsform eine Vergrößerung der Außenkontur des Akkupacks 100 durch die Verbindungsmittel 202, 203 in Verbindungsrichtung 270 zwingend. Unter einem Hinausragen soll in diesem Zusammenhang insbesondere eine Vergrößerung der Außenkontur durch die Verbindungsmittel 202, 203 in zumindest eine zweite Richtung verstand werden, die sich senkrecht zu der ersten Richtung 270 erstreckt. In diesem Fall ist die zweite Richtung beispielhaft nach unten gerichtet.

Das vordere Verbindungsmittel 202 wird mittels der Befestigungselementaufnahmen 206 an die Endplatte 106 des Akkupacks 100 angeschraubt. Das Verbindungsmittel 202 weist beispielhaft einen einzelnen Funktionsabschnitt 400 auf, der auf einer einzigen Seite hinausragt. Der Funktionsabschnitt 400 umfasst dabei die Führungselemente 214 der Führungseinheit 216 im Wesentlichen vollständig. Zudem umfasst der Funktionsabschnitt 400 des Verbindungsmittels 202 teilweise die Linearlagerelemente 220.

Abhängig von der Ausgestaltung der Sicherungseinheit 244 der Verbindungsvorrichtung 200 wirkt der Funktionsabschnitt 400 des Verbindungsmittels 202 zudem als ein Anschlagelement 276 zur Sicherung des Akkupacks 100 im entriegelten Zustand (siehe auch Fig. 17).

Das hintere Verbindungsmittel 203 in Fig. 32 weist ebenfalls einen Funktionsabschnitt 400 auf. Der Funktionsabschnitt 400 weist dabei auf der dem Akkupack 100 abgewandten Seite die Trennwand 118 und das zweite Sicherungselement 114 für die alternative Sicherungseinheit 244a auf (siehe auch Fig. 12). Zudem umfasst der Funktionsabschnitt 400 einer gegenüberliegenden Seite, insbesondere auf der dem Akkupack 100 zugewandten Seite), die zuvor beschriebenen Eingriffsmittel 256 und Halteelemente 260 zur Verbindung des Akkupacks 100 mit der Elektrofahrrad 16 auf (siehe Fig. 4).

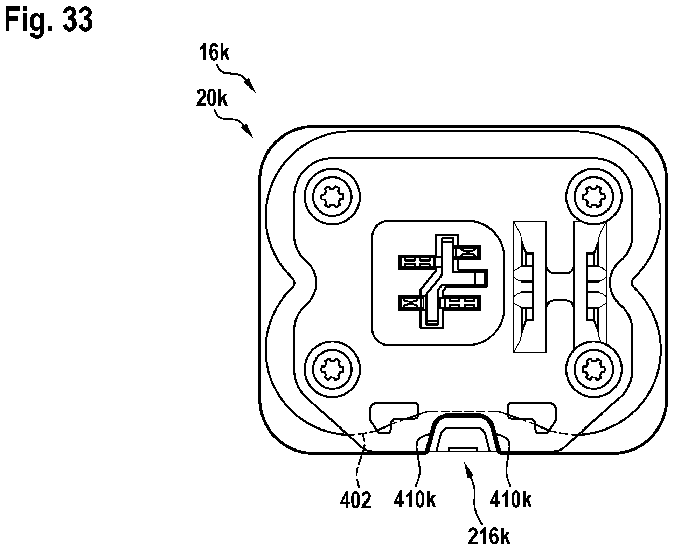

In Fig. 33 ist eine ein alternative Ausführungsform eines Rahmens 20k in einer schematischen Ansicht gezeigt, wobei der Rahmen 20k des Elektrofahrrads 16k eine integrierte Führungseinheit 216k aufweist. Insbesondere ist der Rahmen 20k derart geformt, dass der Akkupack 100 mittels dem vorderen Verbindungsmittel 202 und/oder dem hinteren Verbindungsmittel 203 am Akkupack 100 unmittelbar durch den Rahmen 20k, insbesondere ein einstückig mit dem Rahmen 20k ausgebildetes Führungselements 410k des Rahmens 20k, führbar ist.

Das Führungselement 410k des Rahmens 20k entspricht in seiner Geometrie dabei im Wesentlichen der Führungsschiene 222 der Verbindungsvorrichtung 200 gemäß Fig. 3 mit einem beispielhaft trapezförmigen Querschnitt. Die Führungselemente 214 des Akkupacks 100 beziehungsweise des Verbindungsmittels 202 liegen dabei zur Führung unmittelbar und direkt an der Innenseite des Rahmens 20k des Elektrofahrrads 16k an.

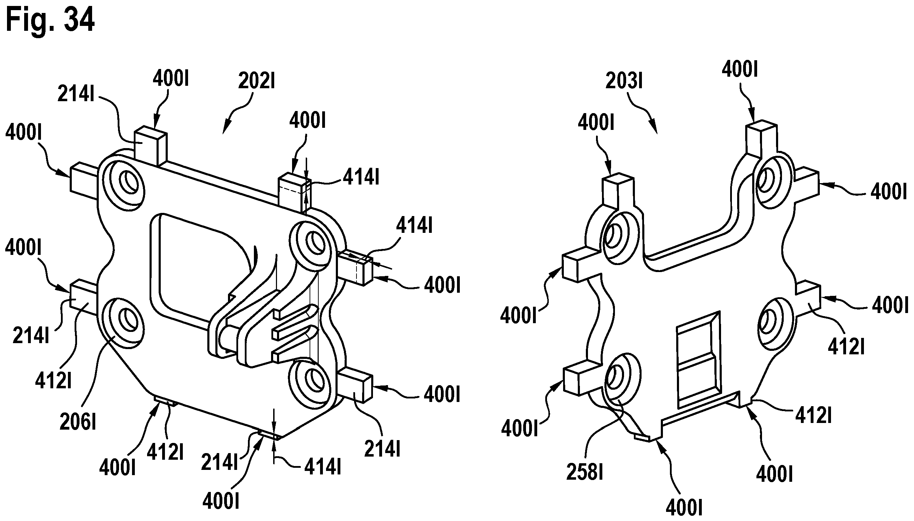

In Fig. 34 ist ein erstes Verbindungsmittel 202l und ein zweites Verbindungsmittel 203l zur Befestigung an einem Akkupack 100 mit einer alternativen Ausführungsform des Funktionsabschnitts 400 ausgebildet. Die Verbindungsmittel 202l sind dabei über die jeweiligen Befestigungselementaufnahmen 206l, 258l mit dem Gehäuse 102 des Akkupacks 100 gemäß Fig. 2 verbindbar.

Insbesondere weisen die Verbindungsmittel 202l, 203l eine Vielzahl an Funktionsabschnitten 400l auf, die über den Akkupack 100 seitlich hinausragen. Die Funktionsabschnitte 400l sind dabei beispielhaft als rechteckige Nasen 412l ausgebildet, die sich geradlinig quer, insbesondere senkrecht, zu der Längserstreckung des Akkupacks 100, erstrecken. Beispielhaft weisen die Verbindungsmittel 202l, 203l jeweils zwei Funktionsabschnitte 400l auf jeder Seite, also insgesamt acht Funktionsabschnitte 400l, auf. Es ist aber ebenso denkbar, dass auf jeder Seite nur ein Funktionsabschnitt, mehrere Funktionsabschnitte oder eine unterschiedliche Anzahl an Funktionsabschnitten angeordnet ist.

Die an einem der Verbindungsmittel 202l, 203l angeordneten Funktionsabschnitte 400l weisen beispielhaft eine gleiche Länge 414l auf. Bei der Länge 414l handelt es sich dabei um die Länge, um die der Funktionsabschnitt 400l über die Kontur des verbundenen Gehäuseteils 104 des Akkupacks 100 hinausragt.

Die Funktionsabschnitte 400l sind beispielhaft als Führungselemente 214l ausgebildet, die Zur Führung des Akkupacks 100 beim Verbindungsprozess vorgesehen sind. Die Länge 414l, insbesondere die Länge 414l und Form, der Führungselemente 214l ist dabei auf eine Geometrie des Rahmens 20 des Elektrofahrrads angepasst. Alternativ oder zusätzlich ist ebenso denkbar, dass zumindest einer der Funktionsabschnitte 400l als ein Sicherungselement ausgebildet ist.

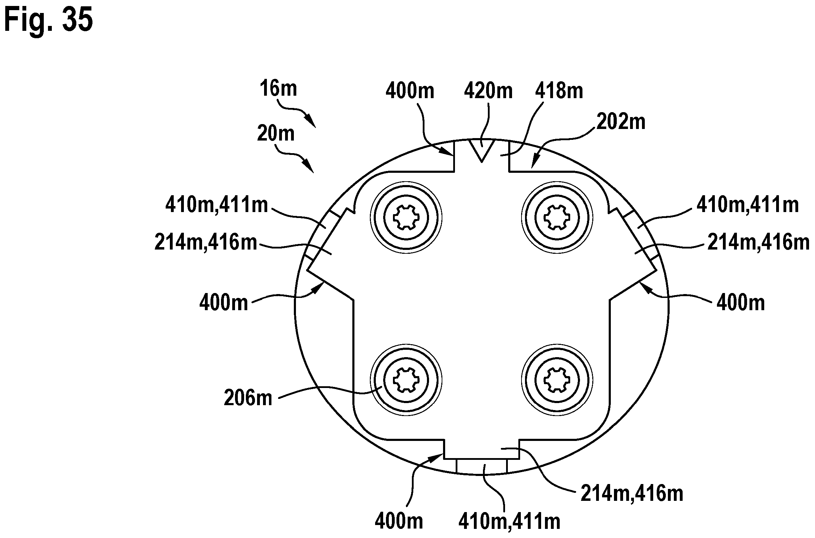

In Fig. 35 ist eine weitere Ausführungsform eines Verbindungsmittels 202m in einer schematischen Ansicht gezeigt. Das Verbindungsmittel 202m weist beispielhaft vier Befestigungselementaufnahmen 206m zur Befestigung des Verbindungsmittels 202m an dem Akkupack 100 gemäß Fig. 2 auf. Das Verbindungsmittel 202m ist in einem mit einem Rahmen 20m eines Elektrofahrrads 16m verbundenen Zustand gezeigt, wobei der Rahmen 20m einen im Wesentlichen ovalförmigen Querschnitt im Aufnahmebereich für den Akkupack 100 aufweist.

Das Verbindungsmittel 202m weist beispielhaft vier Funktionsabschnitte 400m auf, die die Außenkontur des Akkupacks 100 insbesondere seitlich vergrößern. Insbesondere weist das Verbindungsmittel 202m drei Funktionsabschnitte 400m auf, die als Führungselemente 214m, beispielhaft in Form von Gleitflächen 416m, ausgebildet sind. Der Rahmen 20m weist an seiner Innenfläche korrespondierende Führungselemente 410m auf. Die Führungselemente 410m des Rahmens 20m sind beispielhaft als Dämpfungselemente 411m ausgebildet. Die Dämpfungselemente 411m sind beispielhaft aus einem elastischen Kunststoff, insbesondere aus einem Gummi, ausgebildet. Alternativ wäre ebenso denkbar, dass die Führungselemente 410m im Rahmen 20m aus einem metallischen Werkstoff ausgebildet sind oder einstückig mit dem Rahmen 20m ausgebildet sind.

Zudem weist das Verbindungsmittel 202m einen Funktionsabschnitt 400m auf, das ein Ausrichtungselement 418m aufweist, wobei das Ausrichtungselement 418m zur Ausrichtung und ordnungsgemäßen Verbindung des Akkupacks mit dem Elektrofahrrad vorgesehen ist. Insbesondere kann durch das Ausrichtungselement 418m sichergestellt werden, dass der Akkupack nur in einer einzigen Ausrichtung mit Bezug auf den Rahmen in diesen eingeschwenkt oder eingeschoben werden kann. Der Rahmen 20m weist dabei ein korrespondierendes Ausrichtungselement 420m auf, wobei das korrespondierende Ausrichtungselement 420m des Rahmens 20m und das Ausrichtungselement 418m des Verbindungsmittels 202m während des Verbindungsvorgangs zumindest abschnittsweise einen Formschluss bilden. Das Ausrichtungselement 418m und/oder das korrespondierende Ausrichtungselement 420m können zusätzliche eine Führungsfunktion aufweisen. Das Verbindungsmittel 202m kann ein einzelnes Ausrichtungselement 418m oder mehrere Ausrichtungselemente aufweisen. Das Ausrichtungselement 418m ist beispielhaft kerbenförmig mit einem insbesondere V-förmig Querschnitt ausgebildet.

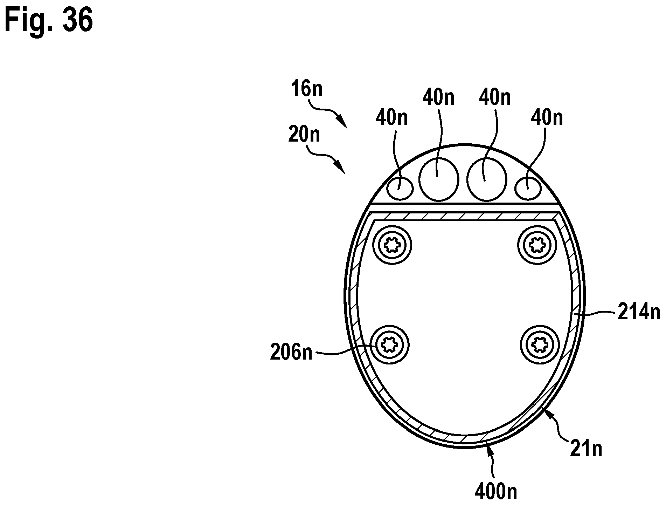

In Fig. 36 ist eine weitere Ausführungsform eines Verbindungsmittels 202n in einer schematischen Ansicht gezeigt. Das Verbindungsmittel 202n weist beispielhaft vier Befestigungselementaufnahmen 206n zur Befestigung des Verbindungsmittels 202n an dem Akkupack 100 gemäß Fig. 2 auf. Das Verbindungsmittel 202n ist in einem mit einem Rahmen 20n eines Elektrofahrrads 16n verbundenen Zustand gezeigt, wobei der Rahmen 20n einen im Wesentlichen ovalförmigen Querschnitt aufweist, wobei der Rahmen 20n zwei Kammern 21n umfasst. Die kleinere Kammer 21n ist zur Führung von Kabelelementen 23n im Rahmen 20n vorgesehen und die größere Kammer 21n bildet den Aufnahmebereich für den Akkupack 100.

Das Verbindungsmittel 202n weist beispielhaft vier Befestigungselementaufnahmen 206n zu Befestigung am Akkupack auf. Das Verbindungsmittel 202n weist einen Funktionsabschnitt 400n auf, der an den Querschnitt des Rahmens 20n, insbesondere an den Querschnitt des Aufnahmebereichs für den Akkupack angepasst ist. Beispielhaft ist der Funktionsabschnitt 400n umlaufend ausgebildet und bildet ein Führungselement 214n zur Führung des Akkupacks 100 im Rahmen 20n. Der Rahmen 20n weist keine speziellen Führungselemente an seiner Innenfläche auf. Um nur eine einzige Verbindungsmöglichkeit mit dem Akkupack sicherzustellen, ist der Rahmen 20n derart ausgebildet, dass der Querschnitt asymmetrisch ausgebildet ist.

Das Verbindungsmittel 203 weist zudem eine Entnahmehilfe 500 auf (siehe Fig. 12), die zur Unterstützung der Entnahme des Akkupacks 100 aus dem Rahmen 20 des Elektrofahrrads 16 ausgebildet ist. Durch die Integration des Akkupacks 100 in den Rahmen 20 kann ein Lösen der Verbindung abhängig von der Rahmengeometrie und auch abhängig von einer Größe einer Hand des Benutzers herausfordernd sein. Durch die Integration der Entnahmehilfe 500 in das Verbindungsmittel 203 kann der Akkupack 100 an vorliegenden geometrischen Bedingungen angepasst und optimal für den Benutzer ausgelegt werden.

Die Entnahmehilfe 500 ist beispielhaft als eine Eingriffsmulde 502 ausgebildet. Die Entnahmehilfe 500 ist beispielhaft auf einer dem Akkupack 100 abgewandten Seite des Verbindungsmittels 203 angeordnet. Die Entnahmehilfe 500 ist beispielsweise mittig im Verbindungsmittel 203 angeordnet, es wäre aber auch eine nicht mittige Anordnung denkbar. Die Entnahmehilfe 500 ist beispielhaft einstückig mit dem Verbindungsmittel 203 ausgebildet. Es wäre allerdings ebenso denkbar, dass die Entnahmehilfe 500 aus einem anderen Material besteht und kraft- und/oder formschlüssig oder stoffschlüssig mit dem Verbindungsmittels 203 verbunden ist.

Der Akkupack 100, insbesondere das Verbindungsmittel 203, umfasst eine einzige Entnahmehilfe 500. Es wäre allerdings ebenso denkbar, dass das Verbindungsmittel 203 oder der Akkupack 100 mehrere Entnahmehilfen 500 aufweist, die beispielsweise an beiden Verbindungsmitteln 202, 203 angeordnet sind.

Die Entnahmehilfe 500 umfasst einen Teilbereich mit einer Oberflächenstruktur 504 zur Erhöhung der Rauigkeit. Die Oberflächenstruktur 504 umfasst dabei beispielhaft drei rippenförmige Erhebungen 506, die parallel zueinander verlaufen.

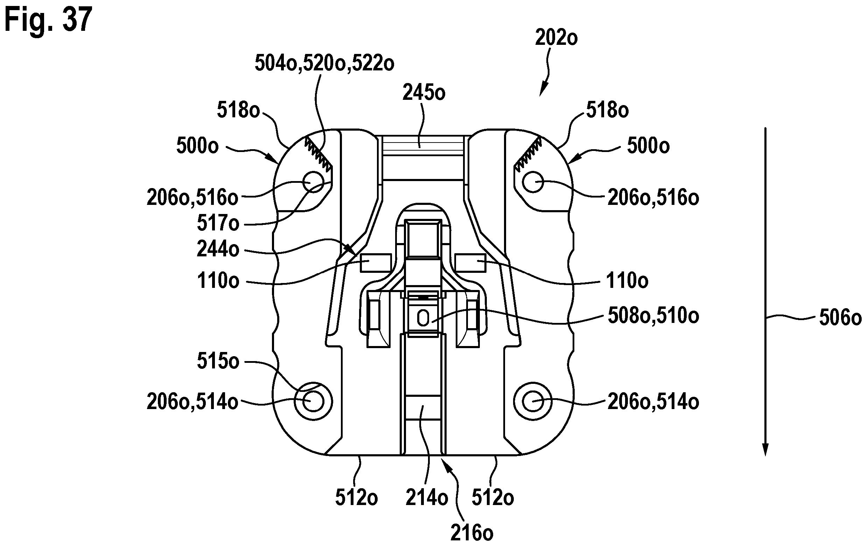

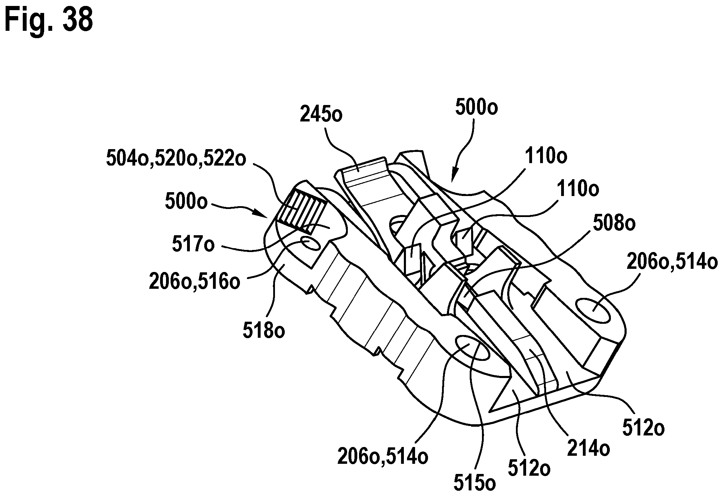

In Fig. 37 ist eine alternative Ausführungsform eines Verbindungsmittels 202o mit einer Entnahmehilfe 502o in einer Vorderansicht und in Fig. 38 in einer perspektivischen Ansicht gezeigt. Das Verbindungsmittel 202o ist dabei für einen mit einem Einschwenkvorgang verbindbaren Akkupack vorgesehen. Das Verbindungsmittel 202o kann dabei für den zuvor beschriebenen Akkupack 100 oder einen anderen Akkupack vorgesehen sein.

Das Verbindungsmittel 202o umfasst eine Führungseinheit 216o, die zumindest ein Führungselement 214o aufweist, die zur Führung des Akkupacks während des Verbindungsvorgangs entlang der Schwenkrichtung 506o vorgesehen ist. Das Führungselement 214o ist beispielhaft als ein im Wesentlichen geradlinig ausgebildeter Steg ausgebildet. Benachbart zu dem Führungselement 214o weist das Verbindungsmittel 202o auf einer ersten Seite, insbesondere auf einer Unterseite, zwei Aufnahmeöffnungen 512o zur Aufnahme von korrespondierenden Verbindungselementen (nicht dargestellt) im Elektrofahrrad auf.

Des Weiteren umfasst das Verbindungsmittel 202o ein Verriegelungselement 508o, das zur Verriegelung des Akkupacks vorgesehen ist. Das Verriegelungselement 508o ist beispielhaft als eine metallische Verriegelungselementaufnahme 510o ausgebildet, in welche im verriegelten Zustand ein nicht dargestelltes Verriegelungselement des Elektrofahrrads eingreift. Das Verbindungsmittel 202o ist beispielhaft aus einem Kunststoff, insbesondere aus einer Hartplastik, ausgebildet. Das Verriegelungselement 508o ist beispielhaft durch eine Klippsverbindung am Verbindungsmittel 202o befestigt.

Zudem umfasst das Verbindungsmittel 202o zwei Sicherungselemente 110o einer Sicherungseinheit 244o, die beispielhaft hakenförmig ausgebildet und über ein Betätigungselement 245o betätigbar ausgebildet ist. Die beiden Sicherungselemente 246o sind dabei über das Betätigungselement 245o einstückig miteinander verbunden. Das Betätigungselement 245o ist beispielhaft auf einer zweiten Seite angeordnet, die der ersten Seite gegenüberliegend angeordnet ist. Das Betätigungselement 245o ist dabei derart ausgebildet, dass bei Beaufschlagung des Betätigungselements 245o mit einer Kraft in Richtung des Akkupacks die Sicherungselemente 244o ebenfalls eingedrückt werden und somit eine Sicherung lösbar ist.

Zur Befestigung des Verbindungsmittels 202o an einem Akkupack weist das Verbindungsmittel 202o beispielhaft vier Befestigungselementaufnahmen 206o auf. Im Bereich der ersten Seite weist das Verbindungsmittel 202o zwei erste Befestigungselementaufnahmen 514o im Bereich der ersten Seite und zwei zweite Befestigungselementaufnahmen 516o im Bereich der gegenüberliegenden zweiten Seite auf.

Die ersten Befestigungselementaufnahmen 514o im Bereich der ersten Seite sind dabei im Querschnitt im Wesentlichen an einen Kopfbereich der Schraube angepasst, sodass die Befestigungselementaufnahme 514o von einer durchgehenden Wand 515o eingegrenzt ist.

Die zweiten Befestigungselementaufnahmen 516o im Bereich der zweiten Seite sind im Unterscheid zu den ersten Befestigungselementaufnahmen 514o im Bereich der ersten Seite nur teilweise an die Schraube beziehungsweise den Kopfbereich der Schraube angepasst. Eine die Befestigungselementaufnahme 516o radial begrenzende Wandung 517o ist nicht durchgehend und nach außen hin geöffnet ausgebildet.

Durch die Öffnung 518o nach außen wird die Befestigungselementaufnahme 516o derart vergrößert, dass diese eine Entnahmehilfe 500o zur Entnahme des Akkupacks bildet. Insbesondere sind beide Befestigungselementaufnahmen 516o im Bereich der zweiten Seite als Entnahmehilfe 500o ausgebildet, wobei sich die jeweiligen Öffnung 518o zum Eingreifen für den Benutzer auf gegenüberliegenden Seiten angeordnet sind. Beispielhaft kann dadurch der Benutzer das Verbindungsmittel 202o durch Verwendung des Daumens und des Zeigefingers einhändig seitlich greifen und beispielsweise den Akkupack aus einem Rahmen über eine Schwenkbewegung herausziehen.

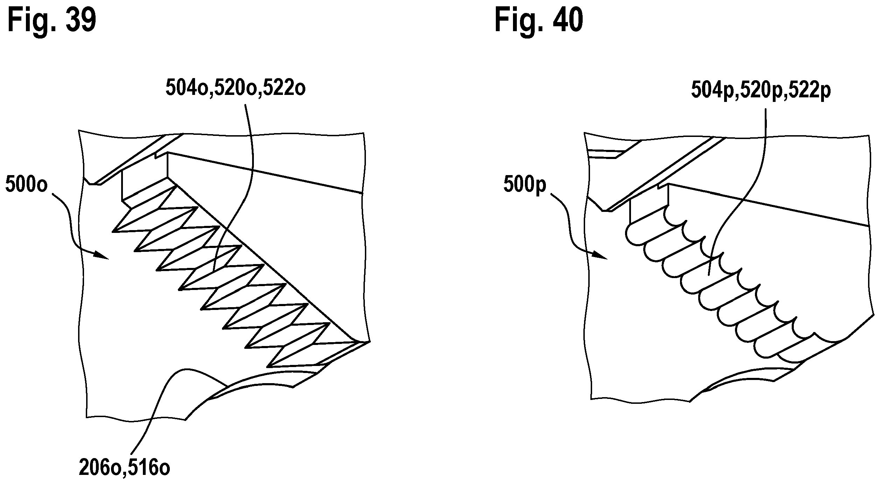

Um die Entnahme weiter zu erleichtern, weist die Entnahmehilfe 500o, insbesondere die die Befestigungselementaufnahme 514o begrenzende Wandung 517o eine Oberflächenstruktur 504o auf. Die Oberflächenstruktur 504o ist beispielhaft als eine Zahnung 520o ausgebildet. Die Zahnung 520 weist dabei eine Vielzahl an spitzen Zacken 522o auf (siehe vergrößerte Darstellung in Fig. 39). Alternativ sind auch alternative Formen der Oberflächenstruktur 504o denkbar, beispielsweise in Form einer Oberflächenstruktur 504p mit einer Zahnung 520p mit konvexen Wölbungen 524p (siehe Entnahmehilfe 500p in Fig. 40), eine Riffelung oder eine kammartige Struktur.

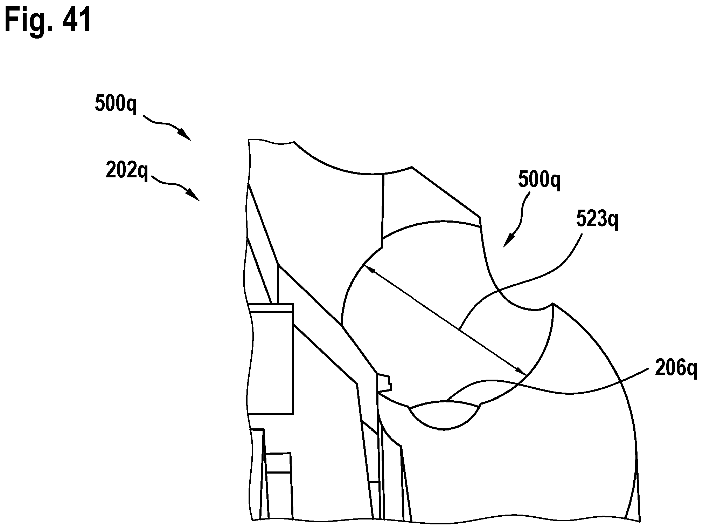

In Fig. 41 ist ein alternative Ausführungsform einer Entnahmehilfe 500q eines Verbindungsmittels 202q in einer perspektivischen Ansicht gezeigt. Die Entnahmehilfe 500q ist ebenfalls integral mit der Befestigungselementaufnahme 206q ausgebildet, wobei im Unterschied zu der Ausführungsform gemäß Fig. 37 der Eingriff durch den Benutzer nicht seitlich, sondern im Wesentlichen von vorne stattfindet. Die Befestigungselementaufnahme 206q weist dabei eine im Wesentlichen kugelförmige Form auf, wobei ein Durchmesser 523q der Befestigungselementaufnahme 206q über 50% größer als ein Durchmesser der aufzunehmenden Schraube ist.

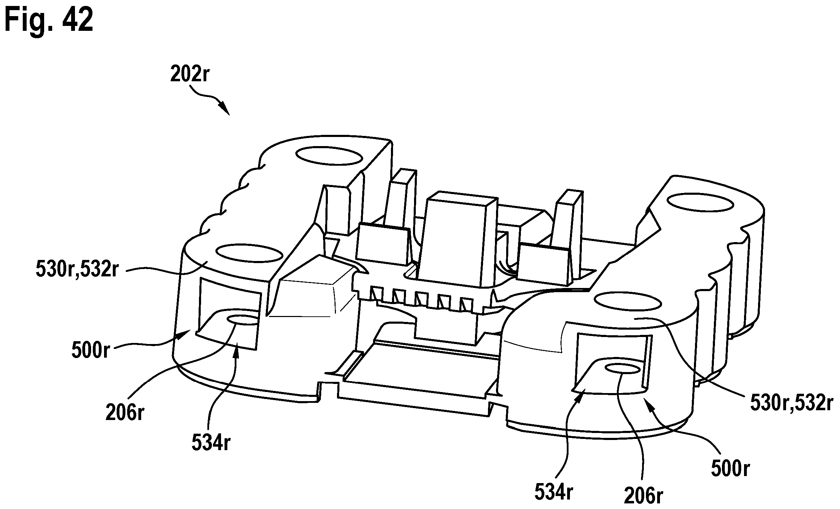

In Fig. 42 ist eine weitere alternative Ausführungsform eines Verbindungsmittels 202r in einer perspektivischen Ansicht gezeigt, wobei sich das Verbindungsmittel 202r insbesondere in der Ausgestaltung der Entnahmehilfe 500r von dem Verbindungsmittel 202o gemäß Fig. 37 unterscheidet.

Die Entnahmehilfe 500r weist dabei ein Verbindungselement 530r zur Verbindung des Verbindungsmittels 202r mit einer Schlaufe (nicht dargestellt) auf. Alternativ zur Schlaufe kann dabei auch ein andersartig gestaltetes Mittel vorgesehen sein, mittels welchem die Entnahme ermöglich oder vereinfacht werden kann. Das Verbindungselement 530r ist beispielhaft in Form eines Stegs 532r benachbart zu einer seitlichen Öffnung 534r insbesondere im Bereich der Befestigungselementaufnahme 206r des Verbindungsmittels 202r ausgebildet. Alternativ wäre auch eine Anordnung der seitlichen Öffnung 534r denkbar. Die seitliche Öffnung 534r ist dabei nach außen von dem Steg 532r begrenzt. Im mit der Schlaufe verbundenen Zustand kann durch ein Ziehen der Schlaufe der Akkupack einfach entnommen werden. Die seitliche Öffnung 534r ist beispielhaft im Wesentlichen viereckig ausgebildet, es sind allerdings auch andere Formen an Öffnungen denkbar.

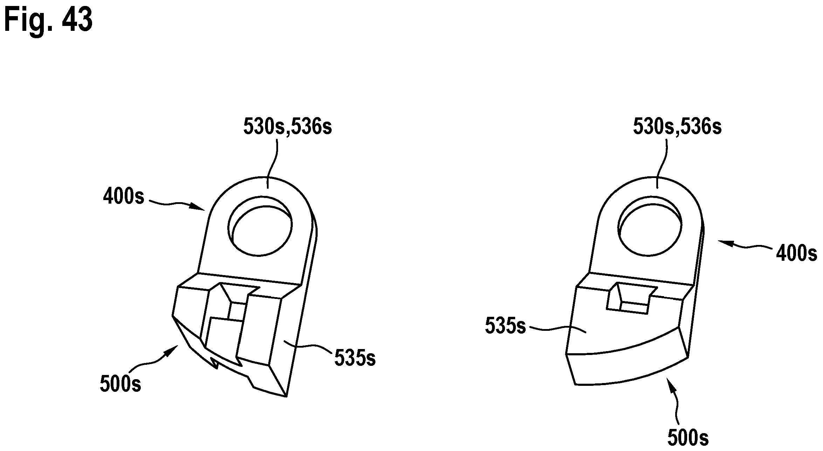

In Fig. 43 ist eine weitere alternative Ausführungsform einer Entnahmehilfe 500s, beispielhaft für das Verbindungsmittel 202r nach Fig. 42, gezeigt. Die Entnahmehilfe 500s ist dabei als ein optionales Entnahmeelement 535s ausgebildet. Das Entnahmeelement 535s wird dabei teilweise über die seitliche Öffnung 534r im Bereich der Befestigungselementaufnahme 506r aufgenommen und kann beispielsweise über die Schraubverbindung oder einen Klippsmechanismus mit dem Verbindungsmittel 202r verbunden werden. Zudem weist das Entnahmeelement 535s ein Verbindungselement 530s in Form einer Lasche 536s auf, die im mit dem Verbindungsmittel 202r verbundenen Zustand seitlich hinausragt. Die Lasche 536s kann zur Verbindung des Entnahmeelements 535s, insbesondere des Verbindungsmittels 202r, mit einer Schlaufe verwendet werden.

Die Lasche 536s bildet somit einen Funktionsabschnitt 400s. Somit weist das Verbindungsmittel 202r eine Aufnahme zur lösbaren und insbesondere optionalen Anbindung eines Funktionsabschnitts 400s auf.

## Patentansprüche

1. Verbindungsvorrichtung zur Verbindung eines Akkupacks (100) mit einem Elektrofahrrad (16), mit einer Führungseinheit (216a) zur linearen Führung des Akkupacks (100) im Verbindungsprozess, mit einer Verriegelungseinheit (212) zur Verriegelung des Akkupacks (100) am Elektrofahrrad (16), wobei die Verriegelungseinheit (212) an einem ersten Abschnitt (1) der Führungseinheit (216a) angeordnet ist, wobei die Verbindungsvorrichtung (200a) derart ausgebildet ist, dass der Akkupack (100) ausschließlich über eine Linearbewegung mit dem Elektrofahrrad (16) verbindbar ist, wobei
die Verbindungsvorrichtung (200) eine Sicherungseinheit (244a) zur Sicherung des Akkupacks (100) im entriegelten Zustand aufweist, wobei die Sicherungseinheit (244a) ein bewegliches Sicherungselement (246a) aufweist,
**dadurch gekennzeichnet, dass**
das Sicherungselement (246a) als ein indirekt manuell über den Akkupack betätigbarer federnder Anschlag (247a) ausgebildet ist, an welchem der Akkupack (100) im entriegelten Zustand anliegt.

2. Verbindungsvorrichtung nach Anspruch 1, **dadurch gekennzeichnet, dass** die Sicherungseinheit (244a) an dem ersten Abschnitt (1) oder an einem zweiten Abschnitt (2) der Führungseinheit (216a) angeordnet ist.

3. Verbindungsvorrichtung nach einem der vorhergehenden Ansprüche, **dadurch gekennzeichnet, dass** das Sicherungselement (246a) direkt betätigbar ausgebildet ist.

4. Verbindungsvorrichtung nach einem der vorhergehenden Ansprüche, **dadurch gekennzeichnet, dass** die Verriegelungseinheit (212) derart betätigbar ausgebildet ist, dass der Akkupack (100) bei der Entriegelung teilweise ausgeworfen wird.

5. Verbindungsvorrichtung nach einem der vorhergehenden Ansprüche, **dadurch gekennzeichnet, dass** die Verriegelungseinheit (212) zumindest ein bewegliches Verriegelungselement (274) aufweist, wobei das Verriegelungselement (274) im verriegelten Zustand insbesondere vorgespannt ausgebildet ist.

6. Verbindungsvorrichtung nach einem der vorhergehenden Ansprüche, **dadurch gekennzeichnet, dass** die Verriegelungseinheit (212) mit einer Betätigungseinheit (240) gekoppelt ist, über die die Verriegelungseinheit (212) vorzugsweise manuell betätigbar ausgebildet ist.

7. Verbindungsvorrichtung nach Anspruch 6, **dadurch gekennzeichnet, dass** die Betätigungseinheit (240) als ein Schloss (242) ausgebildet ist.

8. Verbindungsvorrichtung nach einem der vorhergehenden Ansprüche, **dadurch gekennzeichnet, dass** die Verriegelungseinheit (212) zumindest ein Linearlagerelement (264) zur Lagerung des Akkupacks (100) im verriegelten Zustand aufweist.

9. Verbindungsvorrichtung nach einem der vorhergehenden Ansprüche, **dadurch gekennzeichnet, dass** das Sicherungselement (246a) mit der Führungseinheit (216a) verbunden ist.

10. Verbindungsvorrichtung nach einem der vorhergehenden Ansprüche, **dadurch gekennzeichnet, dass** das Sicherungselement (246) der Sicherungseinheit (244) und das Führungselement (252) der Führungseinheit (216) unabhängig voneinander über eine Verschraubung (224) mit der Führungsschiene (222) und/oder dem Rahmen (20) des Elektrofahrrads (16) verbindbar sind.

11. Verbindungsvorrichtung nach einem der vorhergehenden Ansprüche, **dadurch gekennzeichnet, dass** das Sicherungselement (246a) metallisch oder aus Kunststoff gefertigt ist, insbesondere dass das Sicherungselement (246a) als eine metallische Blattfeder (250) ausgebildet ist.

12. Elektrofahrrad mit einer Verbindungsvorrichtung (200a) nach einem der vorhergehenden Ansprüche.

13. Akkupack für ein Elektrofahrrad (16) nach Anspruch 12.

## Claims

1. Connection device for connecting a battery pack (100) to an electric bicycle (16), having a guide unit (216a) for linearly guiding the battery pack (100) during the connection process, having a locking unit (212) for locking the battery pack (100) to the electric bicycle (16), wherein the locking unit (212) is arranged on a first portion (1) of the guide unit (216a), wherein the connection device (200a) is designed in such a way that the battery pack (100) can be connected to the electric bicycle (16) exclusively by way of a linear movement, wherein
the connection device (200) has a securing unit (244a) for securing the battery pack (100) in the unlocked state, wherein the securing unit (244a) has a movable securing element (246a),
**characterized in that**
the securing element (246a) is designed as a spring-action stop (247a) which can be operated indirectly manually via the battery pack and against which the battery pack (100) bears in the unlocked state.

2. Connection device according to Claim 1, **characterized in that** the securing unit (244a) is arranged on the first portion (1) or on a second portion (2) of the guide unit (216a).

3. Connection device according to either of the preceding claims, **characterized in that** the securing element (246a) designed such that it can be directly operated.

4. Connection device according to any of the preceding claims, **characterized in that** the locking unit (212) is designed such that it can be operated in such a way that the battery pack (100) is partially ejected during the unlocking operation.

5. Connection device according to any of the preceding claims, **characterized in that** the locking unit (212) has at least one movable locking element (274), wherein the locking element (274) is designed in particular such that it is preloaded in the locked state.

6. Connection device according to any of the preceding claims, **characterized in that** the locking unit (212) is coupled to an operating unit (240) via which the locking unit (212) is designed preferably such that it can be manually operated.

7. Connection device according to Claim 6, **characterized in that** the operating element (240) is designed as a lock (242).

8. Connection device according to any of the preceding claims, **characterized in that** the locking unit (212) has at least one linear bearing element (264) for supporting the battery pack (100) in the locked state.

9. Connection device according to either of the preceding claims, **characterized in that** the securing element (246a) is connected to the guide unit (216a).

10. Connection device according to any of the preceding claims, **characterized in that** the securing element (246) of the securing unit (244) and the guide element (252) of the guide unit (216) can be connected to the guide rail (222) and/or the frame (20) of the electric bicycle (16) independently of each other via a screw connection (224).

11. Connection device according to any of the preceding claims, **characterized in that** the securing element (246a) is made of metal or plastic, in particular **in that** the securing element (246a) is designed as a metal leaf spring (250).

12. Electric bicycle having a connection device (200a) according to any of the preceding claims.

13. Battery pack for an electric bicycle (16) according to Claim 12.

## Revendications

1. Dispositif de connexion pour connecter un bloc-batterie (100) à un vélo électrique (16), avec une unité de guidage (216a) pour guider linéairement le bloc-batterie (100) dans le processus de connexion, avec une unité de verrouillage (212) pour verrouiller le bloc-batterie (100) sur le vélo électrique (16), l'unité de verrouillage (212) étant disposée sur une première section (1) de l'unité de guidage (216a), le dispositif de connexion (200a) étant formé de telle manière que le bloc-batterie (100) peut être connecté au vélo électrique (16) exclusivement par un mouvement linéaire,
le dispositif de connexion (200) comportant une unité de blocage (244A) pour bloquer le bloc-batterie (100) dans l'état déverrouillé, l'unité de blocage (244a) comportant un élément de blocage mobile (246a),
**caractérisé en ce que**
l'élément de blocage (246a) est formé comme une butée élastique (247a) pouvant être actionnée manuellement indirectement par le bloc-batterie, sur laquelle le bloc-batterie (100) repose dans l'état déverrouillé.

2. Dispositif de connexion selon la revendication 1, **caractérisé en ce que** l'unité de blocage (244a) est disposée sur la première section (1) ou sur une deuxième section (2) de l'unité de guidage (216a).

3. Dispositif de connexion selon l'une des revendications précédentes, **caractérisé en ce que** l'élément de blocage (246a) est formé de manière à pouvoir être actionné directement.

4. Dispositif de connexion selon l'une des revendications précédentes, **caractérisé en ce que** l'unité de verrouillage (212) est formée de manière à pouvoir être actionnée de telle manière que le bloc de batteries (100) est en partie éjecté lors du déverrouillage.

5. Dispositif de connexion selon l'une des revendications précédentes, **caractérisé en ce que** l'unité de verrouillage (212) comporte au moins un élément de verrouillage mobile (274), l'élément de verrouillage (274) étant formé en particulier de manière précontrainte dans l'état verrouillé.

6. Dispositif de connexion selon l'une des revendications précédentes, **caractérisé en ce que** l'unité de verrouillage (212) est couplée à une unité d'actionnement (240), par laquelle l'unité de verrouillage (212) est de préférence formée de manière à pouvoir être actionnée manuellement.

7. Dispositif de connexion selon la revendication 6, **caractérisé en ce que** l'unité d'actionnement (240) est formée comme une serrure (242).

8. Dispositif de connexion selon l'une des revendications précédentes, **caractérisé en ce que** l'unité de verrouillage (212) comporte au moins un élément de palier linéaire (264) pour le montage du bloc-batterie (100) dans l'état verrouillé.

9. Dispositif de connexion selon l'une des revendications précédentes, **caractérisé en ce que** l'élément de blocage (246a) est connecté à l'unité de guidage (216a).

10. Dispositif de connexion selon l'une des revendications précédentes, **caractérisé en ce que** l'élément de blocage (246) de l'unité de blocage (244) et l'élément de guidage (252) de l'unité de guidage (216) peuvent être connectés indépendamment l'un de l'autre au rail de guidage (222) et/ou au cadre (20) du vélo électrique (16) par une liaison vissée (224).

11. Dispositif de connexion selon l'une des revendications précédentes, **caractérisé en ce que** l'élément de blocage (246a) est fabriqué en métal ou en matière plastique, en particulier que l'élément de blocage (246a) est formé comme un ressort à lames métallique (250).

12. Vélo électrique avec un dispositif de connexion (200a) selon l'une des revendications précédentes.

13. Bloc-batterie pour un vélo électrique (16) selon la revendication 12.
